(19) Europäisches Patentamt
European Patent Office
Office européen des brevets

(11) EP 2 452 990 B1

# (12) EUROPEAN PATENT SPECIFICATION

(45) Date of publication and mention of the grant of the patent:
**08.01.2014 Bulletin 2014/02**

(51) Int Cl.:
***C09J 7/00*** *(2006.01)* ***C09J 7/02*** *(2006.01)*
*C08K 7/00* *(2006.01)* *C08K 7/28* *(2006.01)*

(21) Application number: **11188773.3**

(22) Date of filing: **11.11.2011**

## (54) Pressure-sensitive adhesive tape or sheet

Druckempfindliches Klebeband oder druckempfindliche Folie

Bande ou feuille adhésive sensible à la pression

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2010 JP 2010254297**
**23.08.2011 JP 2011182020**

(43) Date of publication of application:
**16.05.2012 Bulletin 2012/20**

(73) Proprietor: **Nitto Denko Corporation**
**Ibaraki-shi, Osaka 567-8680 (JP)**

(72) Inventors:
- **Niwa, Masahito**
**Ibaraki-shi, Osaka 567-8680 (JP)**
- **Nakashima, Tooru**
**Ibaraki-shi, Osaka 567-8680 (JP)**

(74) Representative: **Grünecker, Kinkeldey, Stockmair & Schwanhäusser**
**Leopoldstrasse 4**
**80802 München (DE)**

(56) References cited:
**EP-A1- 2 204 426**
**WO-A1-2011/038202**
**JP-A- 2006 265 368**
**JP-A- 2010 126 697**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 452 990 B1

## Description

FIELD OF THE INVENTION

The present invention relates to a pressure-sensitive adhesive tape or sheet. More particularly, the invention relates to a pressure-sensitive adhesive tape or sheet that can maintain high initial adhesive force and adhesion reliability (particularly, repelling resistance) at the time of bonding and can easily be peeled off and can separate and dismantle a joined part at the time of peeling.

BACKGROUND OF THE INVENTION

Conventionally, a pressure-sensitive adhesive tape or sheet ("tape or sheet" is hereinafter sometimes referred to as merely "tape" or "sheet") is utilized in various uses. Representative examples of the pressure-sensitive adhesive sheet include an acrylic pressure-sensitive adhesive sheet (acrylic adhesive sheet) having a pressure-sensitive adhesive layer (adhesive layer) formed using an acrylic pressure-sensitive adhesive composition (acrylic adhesive composition).

In recent years, from growing environmental consciousness, resource saving and recycle are increasingly required in fields using the pressure-sensitive adhesive sheet. For example, an acrylic pressure-sensitive adhesive sheet particularly is required to have both excellent adhesiveness and easy peelability to a metal adherend in fields of automobiles, machines, electric appliances, building materials and the like from standpoints of improvement in yield, rework in process flow, recycle, workability and the like.

As an acrylic pressure-sensitive adhesive sheet, for example, an acrylic pressure-sensitive adhesive sheet having a pressure-sensitive adhesive layer formed from a bubble-containing viscoelastic composition which is a viscoelastic composition containing bubbles, hollow microspheres and a surfactant, the surfactant being a fluorine-based compound having an oxy($C_{2-3}$)alkyl group and a fluorinated hydrocarbon group in the molecule, is known as an acrylic pressure-sensitive adhesive composition having high initial adhesive force and adhesion reliability at the time of bonding (see Patent Document 1). The acrylic pressure-sensitive adhesive sheet had the problem that the sheet cannot easily be peeled off when peeling.

Furthermore, as an acrylic pressure-sensitive adhesive sheet, an acrylic pressure-sensitive adhesive sheet having a pressure-sensitive adhesive layer formed from a pressure-sensitive adhesive composition blending 100 parts by weight of an acrylic polymer prepared by copolymerizing an alkyl (meth)acrylate having 4 to 12 carbon atoms in the alkyl moiety as the main monomer component and a carboxyl-containing radically polymerizable monomer in an amount of 0.5 to 20% by weight based on the total weight of the monomers, with 0.5 to 20 parts by weight of an epoxy crosslinking agent and 0.1 I to 5 parts by weight of a polyisocyanate compound is known as an acrylic pressure-sensitive adhesive sheet that can easily be peeled off at the time of peeling (see Patent Document 2). The acrylic pressure-sensitive adhesive sheet had the problem that the sheet has poor initial adhesive force and adhesion reliability at the time of bonding.

In addition, a pressure-sensitive adhesive tape which maintains high adhesion force and which can be easily separated/debonded is known. In one embodiment, the adhesive layer of said tape comprises a blowing agent and a monomer mixture or a partially polymerized product of at least one alkyl (meth)acrylate having 2 to 18 carbon atoms in the alkyl moiety, at least one N-hydroxyalkyl(meth)acrylamide monomer and at least one nitrogen-containing monomer (see Patent Document 3). In a preferred embodiment, the blowing agent contains heat-expandable microspheres.

Those acrylic pressure-sensitive adhesive sheets were difficult to achieve both excellent adhesiveness and easy peelability to an adherend.

Patent Document 1: JP-A 2006-22189
Patent Document 2: JP-A 2001-247832
Patent Document 3: EP 2 204 426 A1

SUMMARY OF THE INVENTION

An object of the present invention is to provide a pressure-sensitive adhesive sheet that can maintain high initial adhesive force and adhesion reliability (particularly, repelling resistance) at the time of bonding, and can easily be peeled off at the time of peeling from an adherend and can easily separate and dismantle a bonded part.

Another object of the present invention is to provide a pressure-sensitive adhesive sheet that, particularly in the case where the adherend is a metal adherend, can maintain high initial adhesive force and adhesion reliability (particularly, repelling resistance) at the time of bonding, and can easily be peeled off at the time of peeling from the adherend and can easily separate and dismantle a bonded part.

In order to solve the foregoing problem, the present inventors made extensive and intensive investigations. As a result, they found that a pressure-sensitive adhesive sheet, which comprises: a viscoelastic layer containing bubbles

and/or fine particles; and a pressure-sensitive adhesive layer formed on at least one side of the viscoelastic layer and formed from a pressure-sensitive adhesive composition comprising a monomer mixture comprising the following (a1), (a2) and (a3) or partially polymerized product thereof, and thermal-expandable fine particles, exhibits high initial adhesive force and adhesion reliability (particularly, repelling resistance) at the time of bonding, and can easily be lowered its adhesive force by heat and can easily be separated and dismantled when separating and dismantling a bonded part. Consequently, they have accomplished the present invention.

(a1): Alkyl (meth)acrylate monomer having 4 to 12 carbon atoms in its alkyl moiety and having a glass transition temperature when formed into a homopolymer of lower than 0°C.
(a2): Monomer having at least one nitrogen atom and one ethylenically unsaturated bond in its molecule.
(a3): Monomer having one ethylenically unsaturated bond in its molecule and having a glass transition temperature when formed into a homopolymer of 0°C or higher (excluding (a2) above).

Accordingly, the present invention provides a pressure-sensitive adhesive tape or sheet comprising: a viscoelastic layer containing bubbles and/or fine particles; and a pressure-sensitive adhesive layer formed on at least one side of the viscoelastic layer and formed from a pressure-sensitive adhesive composition comprising a monomer mixture comprising the following (a1), (a2) and (a3) or partially polymerized product thereof, and thermal-expandable fine particles:

(a1) alkyl (meth)acrylate monomer having 4 to 12 carbon atoms in its alkyl moiety and having a glass transition temperature when formed into a homopolymer of lower than 0°C;
(a2) monomer having at least one nitrogen atom and one ethylenically unsaturated bond in its molecule; and
(a3) monomer having one ethylenically unsaturated bond in its molecule and having a glass transition temperature when formed into a homopolymer of 0°C or higher (excluding (a2) above).

The pressure-sensitive adhesive tape or sheet according to the present invention, it is preferred that, in the monomer mixture, the content of the (a1) is 50 to 80% by weight, the content of the (a2) is 5 to 40% by weight, and the content of the (a3) is 5 to 40% by weight, based on the total weight (100% by weight) of (a1), (a2) and (a3).

The pressure-sensitive adhesive tape or sheet according to the present invention, it is preferred that the (a2) is at least one monomer selected from the group consisting of dimethyl acrylamide, N-vinyl pyrrolidone and N-vinyl caprolactam.

The pressure-sensitive adhesive tape or sheet according to the present invention, it is preferred that the (a3) is a (meth)acrylate monomer having a glass transition temperature when formed into a homopolymer of 0°C or higher and having a structure that a (meth)acryloyloxy group is bonded with a tertiary carbon atom; or a (meth)acrylate monomer having a glass transition temperature when formed into a homopolymer of 0°C or higher and having a structure that a (meth)acryloyloxy group is bonded with a carbon atom constituting a ring of a monocyclic or polycyclic alicyclic hydrocarbon.

The pressure-sensitive adhesive tape or sheet according to the present invention, it is preferred that the (a3) is at least one monomer selected from the group consisting of tert-butyl (meth)acrylate, cyclohexyl (meth)acrylate, isobornyl (meth)acrylate, 1,4-cyclohexanedimethanol mono(meth)acrylate, dicyclopentenyloxyethyl (meth)acrylate and dicyclopentanyl (meth)acrylate.

The pressure-sensitive adhesive tape or sheet according to the present invention, it is preferred that the monomer mixture does not substantially contain a carboxyl group-containing monomer.

The pressure-sensitive adhesive tape or sheet according to the present invention, it is preferred that the pressure-sensitive adhesive composition further comprises a photopolymerization initiator.

The pressure-sensitive adhesive tape or sheet according to the present invention, it is preferred that the pressure-sensitive adhesive composition further comprises a monomer having two or more ethylenically unsaturated bonds in its molecule.

Due to the above constitution, the pressure-sensitive adhesive sheet of the present invention can maintain high initial adhesive force and adhesion reliability (particularly, repelling resistance) at the time of bonding, can easily be peeled off at the time of peeling from an adherend and can easily separate and dismantle a bonded part. Particularly, the pressure-sensitive adhesive sheet of the present invention, with respect to a metal adherend, has high initial adhesive force and adhesion reliability (particularly, repelling resistance) at the time of bonding, decreases the adhesive force by heat at the time of separating and dismantling the bonded part, and therefore can easily separate and dismantle the bonded part.

BRIEF DESCRITPTION OF THE DRAWINGS

Fig. 1 is a schematically cross-sectional view showing a first step of Preparation Example 1.
Fig. 2 is a schematically cross-sectional view showing a second step of Preparation Example 1.
Fig. 3 is a schematically cross-sectional view showing a third step of Preparation Example 1.
Fig. 4 is a schematically cross-sectional view showing a sheet obtained by the third step of Preparation Example 1.
Fig. 5 is a schematically cross-sectional view showing a pressure-sensitive adhesive sheet obtained by Preparation Example 1.

DESCRIPTION OF REFERENCE NUMERALS AND SIGNS

1a First step of Preparation Example 1

1b Second step of Preparation Example 1

1c Third step of Preparation Example 1

1d Sheet obtained by the third step of Preparation Example 1

1e Pressure-sensitive adhesive sheet obtained by Preparation Example 1

11 Thermal-expandable fine particle-containing pressure-sensitive adhesive composition layer

12 Release film (Separator)

13 Thermal-expandable fine particle-containing pressure-sensitive adhesive layer

14 Active energy ray

15 Viscoelastic layer

16 Pressure-sensitive adhesive sheet

MODE FOR CARRYING OUT THE INVENTION

The pressure-sensitive adhesive sheet (adhesive sheet) of the present invention comprises: a viscoelastic layer containing bubbles and/or fine particles; and a pressure-sensitive adhesive layer formed on at least one side of the viscoelastic layer and formed from a pressure-sensitive adhesive composition (adhesive composition) comprising: a monomer mixture comprising the following (a1), (a2) and (a3) or partially polymerized product thereof; and thermal-expandable fine particles.

(a1): Alkyl (meth)acrylate monomer having from 4 to 12 carbon atoms in its alkyl moiety and having a glass transition temperature when formed into a homopolymer of lower than 0°C.
(a2): Monomer having at least one nitrogen atom and one ethylenically unsaturated bond in its molecule.
(a3): Monomer having one ethylenically unsaturated bond in its molecule and having a glass transition temperature when formed into a homopolymer of 0°C or higher (excluding (a2) above).

In the present invention, the "pressure-sensitive adhesive layer formed from a pressure-sensitive adhesive composition comprising: a monomer mixture comprising (a1), (a2) and (a3) or partially polymerized product thereof; and thermal-expandable fine particle" is sometimes referred to as a "thermal-expandable fine particle-containing pressure-sensitive adhesive layer".
In the present invention, the term "ethylenically unsaturated bond" means a radically polymerizable carbon-carbon double bond. A group having the ethylenically unsaturated bond is not particularly limited, but examples thereof include a vinyl group, a vinylidene group, an allyl group and a (meth)acryloyl group. In the present invention, the term

"monofunctional" means to have one ethylenically unsaturated bond in its molecule, and the term "polyfunctional" means to have at least two ethylenically unsaturated bonds in its molecule.

The term "glass transition temperature (Tg) when formed into a homopolymer" means "a glass transition temperature (Tg) of a homopolymer of the monomer", and means a glass transition temperature (Tg) of a polymer formed using only a certain monomer (sometime referred to as a "monomer X") as a monomer component. Specifically, numeral values of Tg of respective homopolymers are shown in Polymer Handbook (third edition, John Wiley & Sons, Inc., 1989). As for homopolymers that are not described in this literature, values obtained, for example, by the following method are taken as the respective glass transition temperatures (Tg). First, into a reactor equipped with a thermometer, a stirrer, a nitrogen introduction pipe and a reflux cooling tube, 100 parts by weight of a monomer X, 0.2 parts by weight of 2,2'-azobisisobutyronitrile and 200 parts by weight of ethyl acetate as a polymerization solvent are introduced, and the resulting mixture is stirred for 1 hour while introducing nitrogen gas. After thus removing oxygen in a polymerization system, the mixture is heated to 63°C and allowed to react for 10 hours. Subsequently, the reaction system is cooled to room temperature, to thereby obtain a homopolymer solution having a solid content concentration of 33% by weigh. The homopolymer solution is cast on a release liner and dried, to thereby provide a test sample (sheet-like homopolymer) having a thickness of about 2 mm. About 1 to 2 mg of the test sample is weighed on an aluminum-made open cell and Reversing Heat Flow (specific heat component) behaviors of the homopolymer are obtained at a temperature-rising rate of 5°C/min in a nitrogen atmosphere of 50 ml/min using a temperature-modulated DSC (trade name: Q-2000, manufactured by TA Instruments). In accordance with JIS K-7121, the temperature of the point at which a line equidistant in a vertical axis direction from lines which extend a base line at a low temperature side of Reversing Heat Flow obtained and a base line at a high temperature side thereof intersects with a curve of a stepwise changed part of the glass transition is taken as a glass transition temperature (Tg) when formed into a homopolymer.

The form of the pressure-sensitive adhesive sheet of the present invention is not particularly limited. The pressure-sensitive adhesive sheet may have a form that the pressure-sensitive adhesive sheet is wounded in a roll shape, or may have a form that the sheets are laminated. That is, the pressure-sensitive adhesive sheet of the present invention can have a sheet form, a tape form and the like.

The pressure-sensitive adhesive sheet in a wound roll form may have a roll form wound in a state that its pressure-sensitive adhesive face is protected by a release film described hereinafter. Furthermore, in the case of a type having a base described hereinafter, the pressure-sensitive adhesive sheet in a wound roll form may have a roll form wound in a state that its pressure-sensitive adhesive face is protected by a release-treated layer (back surface-treated layer) formed on one side of a base. A release-treating agent (release agent) used in forming the release-treated layer on one side of a base is not particularly limited. Examples of the release-treating agent include silicone release agents and long chain alkyl release agents.

The pressure-sensitive adhesive sheet of the present invention may be a double-coated pressure-sensitive adhesive sheet in which both surface sides of a pressure-sensitive adhesive sheet are a pressure-sensitive adhesive surface and may be a single-coated pressure-sensitive adhesive sheet in which only one surface side of a pressure-sensitive adhesive sheet is a pressure-sensitive adhesive surface. The pressure-sensitive adhesive sheet of the present invention is preferably a double-coated pressure-sensitive adhesive sheet from the standpoint of bonding two members. When the pressure-sensitive adhesive sheet of the present invention is a double-coated pressure-sensitive adhesive sheet, two pressure-sensitive adhesive surfaces may be two surfaces of a thermal-expandable fine particle-containing pressure-sensitive adhesive layer, and may be a surface of a thermal-expandable fine particle-containing pressure-sensitive adhesive layer and a surface of a viscoelastic layer.

(Thermal-expandable fine particle-containing pressure-sensitive adhesive layer)

In the pressure-sensitive adhesive sheet of the present invention, the thermal-expandable fine particle-containing pressure-sensitive adhesive layer is formed from a pressure-sensitive adhesive composition comprising: a monomer mixture comprising the following (a1), (a2) and (a3), or partially polymerized product thereof; and thermal-expandable fine particles.

(a1): Alkyl (meth)acrylate monomer having from 4 to 12 carbon atoms in its alkyl moiety and having a glass transition temperature when formed into a homopolymer of lower than 0°C.

(a2): Monomer having at least one nitrogen atom and one ethylenically unsaturated bond in its molecule.

(a3): Monomer having one ethylenically unsaturated bond in its molecule and having a glass transition temperature when formed into a homopolymer of 0°C or higher (excluding (a2) above).

The term "pressure-sensitive adhesive composition" includes the meaning of "a composition for forming a pressure-sensitive adhesive". The term "monomer mixture" means "a mixture of only monomer components". Furthermore, a pressure-sensitive adhesive composition forming a thermal-expandable fine particle-containing pressure-sensitive adhesive layer is sometimes referred to as a thermal-expandable fine particle-containing pressure-sensitive adhesive composition.

The thermal-expandable fine particle-containing pressure-sensitive adhesive layer contains a polymer obtained from the monomer mixture or its partially polymerized product as its base polymer.

The thermal-expandable fine particle-containing pressure-sensitive adhesive composition contains the monomer mixture or its partially polymerized product as the essential component. The proportion of the monomer mixture or its partially polymerized product in the thermal-expandable fine particle-containing pressure-sensitive adhesive composition is not particularly limited, but is preferably 33% by weight or more (for example, 33 to 91% by weight), and more preferably 40% by weight or more (for example, 40 to 87% by weight), based on the total weight (100% by weight) of the thermal-expandable fine particle-containing pressure-sensitive adhesive composition.

The (a1) contained in the monomer mixture is an alkyl (meth)acrylate monomer having from 4 to 12 carbon atoms in its alkyl moiety, and having a glass transition temperature when formed into a homopolymer of lower than 0°C. Furthermore, the (a1) is a monomer having one (meth)acryloyl group in its molecule, and a monomer having one ethylenically unsaturated bond in its molecule. The (a1) is a so-called monofunctional monomer.

Examples of the (a1) include the compounds shown in Table 1 below. In the monomer mixture, the (a1) may be contained alone or in combination of two or more thereof.

TABLE 1

| (a1) | Glass transition temperature when formed into homopolymer (°C) |
|---|---|
| n-Butyl acrylate | -54 |
| sec-Butyl acrylate | -22 |
| 1,3-Dimethylbutyl acrylate | -15 |
| 2-Ethylbutyl acrylate | -50 |
| 2-Ethylhexyl acrylate | -50 |
| 2-Ethylhexyl methacrylate | -10 |
| n-Octyl acrylate | -65 |
| n-Octyl methacrylate | -20 |
| n-Nonyl acrylate | -58 |
| Lauryl acrylate | -3 |
| Lauryl methacrylate | -65 |

Of those, the (a1) is more preferably an alkyl (meth)acrylate monomer having from 4 to 12 carbon atoms in its alkyl moiety and having a glass transition temperature when formed into a homopolymer of lower than -20°C, and further preferably an alkyl (meth)acrylate monomer having from 4 to 12 carbon atoms in the alkyl moiety and having a glass transition temperature when formed into a homopolymer of lower than -40°C.

Specifically, preferred examples of the (a1) include n-butyl acrylate, sec-butyl acrylate, 2-ethylbutyl acrylate, 2-ethylhexyl acrylate, n-octyl acrylate, n-octyl methacrylate, n-nonyl acrylate, lauryl acrylate and lauryl methacrylate, and more preferred examples of the (a1) include n-butyl acrylate and 2-ethylhexyl acrylate.

In the monomer mixture, the content of the (a1) in the total amount (100% by weight) of (a1), (a2) and (a3) is not particularly limited. However, the (a1) is a main monomer component, and the content thereof is preferably 50 to 80% by weight, more preferably 55 to 75% by weight, and further preferably 60 to 70% by weight. Where the content of the (a1) is less than 50% by weight, there may be some cases of causing disadvantage that initial bonding property (initial adhesive force) under the environment at ordinary temperature (23±2°C) or low temperature (for example, -40 to -10°C) is not sufficiently exerted on the surface of the thermal-expandable fine particle-containing pressure-sensitive adhesive layer of the pressure-sensitive adhesive sheet of the present invention. On the other hand, when the content of the (a1) exceeds 80% by weight, there may be some cases of causing lack of adhesive force, repelling resistance, cohesive property and the like in the thermal-expandable fine particle-containing pressure-sensitive adhesive layer due to lack of the amounts of (a2) and (a3).

The (a2) is a monomer having at least one nitrogen atom and one ethylenically unsaturated bond in its molecule. The (a2) has one ethylenically unsaturated bond in its molecule, and therefore is a monofunctional monomer. The (a2) is a copolymerizable component of (a1). In the monomer mixture, the (a2) may be contained alone or in combination of two or more thereof.

The (a2) is not particularly limited, and is preferably at least one monomer selected from the group consisting of N-vinyl cyclic amide and (meth)acrylamides.

Examples of the N-vinyl cyclic amide include the compounds represented by the following formula (1):

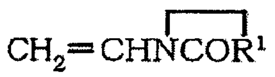

(1)

wherein $R^1$ represents a divalent organic group.

In the formula (1), $R^1$ is preferably a saturated hydrocarbon group, and more preferably an alkylene group with 3 to 5 carbon atoms.

Examples of the N-vinyl cyclic amide include N-vinyl-2-pyrrolidone, N-vinyl-2-piperidone, N-vinyl-3-morpholine, N-vinyl-2-caprolactam, N-vinyl-1,3-oxazin-2-one, N-vinyl-3,5-morpholinedione, N-vinylpyridine, N-vinylpyrimidine, N-vinylpiperazine and N-vinylpyrrole.

Examples of the (meth)acrylamides include (meth)acrylamide, N-alkyl (meth)acryamide and N,N-dialkyl (meth) acrylamide. Examples of the N-alkyl (meth)acrylamide include N-ethyl (meth)acrylamide, N-n-butyl (meth)acrylamide and N-octyl acrylamide. Examples of the (meth)acrylamides further include amino group-containing (meth)acrylamides such as dimethylaminoethyl (meth)acrylamide and diethylaminoethyl (meth)acrylamide. Examples of the N,N-dialkyl (meth)acrylamide include N,N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide and N,N-di(t-butyl) (meth)acrylamide.

Examples of the (meth)acrylamides further include cyclic (meth)acrylamides having N-acryloyl group, such as (meth)acryloylmorpholine, (meth)acryloylpyrrolidone and (meth)acryloylpyrrolizine.

Examples of the (meth)acrylamides further include N-hydroxyalkyl (meth)acrylamide monomers having a hydroxyalkyl group with 1 to 4 carbon atoms. Examples of the N-hydroxyalkyl (meth)acrylamide monomers having a hydroxyalkyl group with 1 to 4 carbon atoms include the compounds represented by the following formula (2):

$$CH_2=C(R^2)CONR^3R^4 \qquad (2)$$

wherein $R^2$ represents hydrogen atom or a methyl group, $R^3$ represents a hydroxyalkyl group with I to 4 carbon atoms, and $R^4$ represents hydrogen atom or a saturated hydrocarbon group with 1 to 10 carbon atoms.

In the formula (2), $R^3$ may have a linear chain structure, and may have a branched chain structure.

Examples of the N-hydroxyalkyl (meth)acrylamide monomer having a hydroxyalkyl group with 1 to 4 carbon atoms include N-methylol (meth)acrylamide, N-(2-hydroxyethyl)acrylamide, N-(2-hydroxyethyl)methacrylamide, N-(2-hydroxypropyl)acrylamide, N-(2-hydroxypropyl)methacrylamide, N-(1-hydroxypropyl)acrylamide, N-(1-hydroxypropyl) methacrylamide, N-(3-hydroxypropyl)acrylamide, N-(3-hydroxypropyl)methacrylamide, N-(2-hydroxybutyl)acrylamide, N-(2-hydroxybutyl)methacrylamide, N-(3-hydroxybutyl)acrylamide, N-(3-hydroxybutyl)methacrylamide, N-(4-hydroxybutyl)acrylamide, N-(4-hydroxybutyl)methacrylamide and N-methyl-N-2-hydroxyethyl (meth)acrylamide.

Further, examples of the (a2) other than the above N-vinyl cyclic amide and (meth)acrylamides include: monomers having an amino group, such as aminoethyl (meth)acrylate, N,N-dimethylaminoethyl (meth)acrylate and N,N-dimethylaminopropyl (meth)acrylate; monomers having a maleimide skeleton, such as N-cyclohexylmaleimide and N-phenylmaleimide; itaconimide monomers such as N-methylitaconimide, N-ethylitaconimide, N-butylitaconimide, N-2-ethylhexylitaconimide, N-laurylitaconimide and N-cyclohexylitaconimide; cyanoacrylate monomers such as acrylonitrile and methacrylonitrile; and succinimide monomers such as N-(meth)acryloyloxymethylene succinimide, N-(meth)acryloyl-6-oxyhexamethylene succinimide and N-(meth)acryloyl-8-oxyoctamethylene succinimide.

From the standpoint of the easiness of achieving a fine balance between adhesion reliability and flexibility of the thermal-expandable fine particle-containing pressure-sensitive adhesive layer, the (a2) is preferably N-vinyl-2-pyrrolidone, N-vinyl-2-caprolactam, (meth)acrylamide having one or two N-alkyl groups with 1 to 4 (more preferably 1 or 2) carbon atoms (for example, N,N-dialkyl acrylamide such as N,N-diethylacrylamide or N,N-dimethylacrylamide), N-(2-(hydroxyethyl)acrylamide, N-(2-hydroxyethyl)methacrylamide, N-methylol (meth)acrylamide, and N-(3-hydroxypropyl)acrylamide. Particularly, the (a2) is preferably N,N-dimethylacrylamide, N-vinyl-2-pyrrolidone and N-vinyl-2-caprolactam, and most preferably N-vinyl-2-pyrrolidone and N-vinyl-2-caprolactam,

In the monomer mixture, the content of the (a2) in the total amount (100% by weight) of (a1), (a2) and (a3) is not particularly limited, but is preferably 5 to 40% by weight, more preferably 7 to 35% by weight, and further preferably 10 to 30% by weight. Where the content of the (a2) is less than 5% by weight, there may be some cases of causing disadvantages that, in the pressure-sensitive adhesive sheet, processability is deteriorated, adhesion reliability is difficult to be exerted, or the like. On the other hand, where the content of the (a2) exceeds 40% by weight, there may be some

cases of causing disadvantages that, in the pressure-sensitive adhesive sheet, flexibility is decreased, tackiness is decreased, or the like. The decrease in flexibility may lead to the decrease in adhesion reliability (particularly, repelling resistance).

The (a3) contained in the monomer mixture is a monomer having one ethylenically unsaturated bond in its molecule and having a glass transition temperature when formed into a homopolymer of 0°C or higher. The (a3) is not included in the above (a2). The (a3) has one ethylenically unsaturated bond in its molecule, and is therefore a monofunctional monomer. In the monomer mixture, the (a3) may be contained alone or in combination of two or more thereof.

Examples of the (a3) include the compounds shown in Table 2 below.

TABLE 2

| (a3) | Glass transition temperature when formed into homopolymer (°C) |
|---|---|
| tert-Butyl acrylate | 43 |
| tert-Butyl methacrylate | 118 |
| Cyclohexyl acrylate | 19 |
| Cyclohexyl methacrylate | 83 |
| Isobornyl acrylate | 94 |
| Isobornyl methacrylate | 110 |
| Furfuryl acrylate | 48 |
| Dicyclopentanyl acrylate | 120 |
| 1,4-Cyclohexanedimethanol monoacrylate | 9.8 |
| Dicyclopentenyloxyethyl acrylate | 10-15 |

Of those, the (3a) is more preferably a monomer having one ethylenically unsaturated bond in the molecule and having a glass transition temperature when formed into a homopolymer of 10°C or higher (excluding the above (2a)), and further preferably a monomer having one ethylenically unsaturated bond in the molecule and having a glass transition temperature when formed into a homopolymer of 15°C or higher (excluding the above (2a)).

The (3a) does not have a structure causing an interaction with an adherend in its molecule (for example, acidic group), and is capable of adjusting elasticity and flexibility of a pressure-sensitive adhesive layer formed from a pressure-sensitive adhesive composition. From this standpoint, the (3a) is preferably "a (meth)acrylate monomer having a structure that a (meth)acryloyloxy group is bonded with a tertiary carbon atom, and has a glass transition temperature when formed into a homopolymer of 0°C or higher" and "a (meth)acrylate monomer having a structure that a (meth)acryloyloxy group is bonded with a carbon atom constituting a ring of a monocyclic or polycyclic alicyclic hydrocarbon, and has a glass transition temperature when formed into a homopolymer of 0°C or higher".

Specifically, the (3a) is preferably tert-butyl acrylate, tert-butyl methacrylate, cyclohexyl acrylate, cyclohexyl methacrylate, isobornyl acrylate, isobornyl methacrylate, dicyclopentanyl acrylate, dicyclopentanyl methacrylate, furfuryl acrylate, 1,4-cyclohexanedimethanol monoacrylate, 1,4-cyclohexanedimethanol monomethacrylate, dicyclopentenyloxyethyl acrylate and dicyclopentenyloxyethyl methacrylate; more preferably, tert-butyl (meth)acrylate, cyclohexyl (meth) acrylate, isobornyl (meth)acrylate, 1,4-cyclohexanedimethanol mono(meth)acrylate, dicyclopentenyloxyethyl (meth)acrylate and dicyclopentanyl (meth)acrylate; and, from the standpoint of polymerizability, the (3a) is further preferably tert-butyl acrylate, cyclohexyl acrylate, isobornyl acrylate, dicyclopentanyl acrylate and 1,4-cyclohexane dimethanol monoacrylate. Furthermore, isobornyl acrylate, isobornyl methacrylate and dicyclopentanyl acrylate have high Tg, and are particularly preferred.

In the monomer mixture, the content of the (a3) in the total amount (100% by weight) of (a1), (a2) and (a3) is not particularly limited, but is preferably 5 to 40% by weight, more preferably 7 to 30% by weight, and further preferably 10 to 20% by weight. Where the content of the (a3) is less than 5% by weight, there may be some cases of causing disadvantage that, in the pressure-sensitive adhesive sheet, adhesive force to an adherend is decreased, or the like. On the other hand, the content of the (a3) exceeds 40% by weight, there may be some cases of causing disadvantages that, in the pressure-sensitive adhesive sheet, flexibility is decreased, tackiness is decreased, or the like. The decrease in flexibility may lead to the decrease in adhesion reliability (particularly, repelling resistance).

The monomer mixture may contain a copolymerizable monomer (a4) together with (a1), (a2) and (a3), unless it impairs the advantageous effects of the pressure-sensitive adhesive sheet of the present invention. The (a4) does not include the above (a1), (a2) and (a3) and a polyfunctional monomer described hereinafter. The (a4) is a monofunctional

monomer having one ethylenically unsaturated bond in its molecule. In the monomer mixture, the (a4) may be contained alone or in combination of two or more thereof. The content of the (a4) in the monomer mixture is not particularly limited, but is preferably selected in an amount that does not impair the advantageous effects of the present invention.

In the pressure-sensitive adhesive sheet of the present invention, the content of (a1) in the monomer mixture is preferably 50 to 80% by weight, the content of (a2) therein is preferably 5 to 40% by weight, and the content of (a3) therein is preferably 5 to 40% by weight, based on the total weight (100% by weight) of (a1), (a2) and (a3), from the standpoints of possibility of exerting both: initial adhesive force and adhesive reliability (particularly, repelling resistance) at the time of bonding; and peelability/dismantlability at the time of peeling from an adherend, in high level.

The partially polymerized product of the monomer mixture means a composition in which at least one monomer component in the monomer components contained in the monomer mixture is partially polymerized. The partially polymerized product of the monomer mixture occasionally has a syrup state having viscosity depending on the conversion.

The partially polymerized product of the monomer mixture is obtained by polymerizing a part of monomer components contained in the monomer mixture. For example, the partially polymerized product of the monomer mixture is obtained by irradiating the monomer mixture with an active energy ray (particularly, ultraviolet ray), avoiding the contact with oxygen.

The conversion of the partially polymerized product of the monomer mixture is not particularly limited. From the standpoint of achieving a viscosity suitable for handling and application of the thermal-expandable fine particle-containing pressure-sensitive adhesive composition, the conversion is preferably 2 to 40% by weight, and more preferably 5 to 20% by weight.

The conversion of the partially polymerized product is obtained as follows. A part of a partially polymerized product is sampled and used as a sample. The sample is precisely weighed to obtain its weight, and the weight is taken as "weight of a partially polymerized product before drying". Subsequently, the sample is dried at 130°C for 2 hours, and the sample after drying is precisely weighed to obtain its weight. The weight is taken as "weight of a partially polymerized product after drying". Weight of the sample decreased by drying at 130°C for 2 hours is obtained from the "weight of a partially polymerized product before drying" and the "weight of a partially polymerized product after drying", and the weight is taken as "weight loss" (volatile content, unreacted monomer weight).
From the "weight of a partially polymerized product before drying" and the "weight loss", the conversion of the partially polymerized product (% by weight) is obtained from the following equation.

$$\text{Conversion of partially polymerized product (\% by weight)} = [1 - (\text{weight loss}) / (\text{weight of partially polymerized product before drying})] \times 100$$

The thermal-expandable fine particle-containing pressure-sensitive adhesive layer contains thermal-expandable fine particles. The thermal-expandable fine particles mean fine particles of which the volume expands by heat. The thermal-expandable fine particles may be contained alone or in combination of two or more thereof.

The thermal-expandable fine particles are not particularly limited, but microencapsulated thermal-expandable fine particles are preferred. Examples of the microencapsulated thermal-expandable fine particles include microspheres formed by incorporating a material which easily gasifies and expands by heating, such as isobutene, propane or pentane, into a shell having elasticity (the microspheres are sometimes referred to as "thermal-expandable microspheres").

The shell of the thermal-expandable microspheres is preferably formed by a thermoplastic material, heat-fusible material, a material burst by thermal expansion, or the like. Examples of the material forming the shell of the thermal-expandable microspheres include vinylidene chloride-acrylonitrile copolymer, polyvinyl alcohol, polyvinyl butyral, polymethyl methacrylate, polyacrylonitrile, polyvinylidene chloride, and polysulfone. The thermal-expandable microspheres are prepared by the conventional methods, such as a coacervation method or an interfacial polymerization method.

As the thermal-expandable microspheres, commercially available products may be used. The commercially available products of the thermal-expandable microspheres are not particularly limited. Examples of the commercially available products include trade names: Matsumoto Microsphere F-30, Matsumoto Microsphere F-50, Matumoto Microsphere F-80S and Matsumoto Microsphere F-85 (manufactured by Matsumoto Yushi-Seiyaku Co., Ltd.); trade name: Expancel Du Series (manufactured by Expancel); and trade name: Fuji Balloon Series (manufactured by Fuji Silysia Chemical Ltd.). Of those, the trade name: Expancel 051 Du 40 (manufactured by Expancel) and the trade name: Fuji Balloon H-40 (manufactured by Fuji Silysia Chemical Ltd.) are more preferably used.

The average particle size of the thermal-expandable fine particles is not particularly limited. The average particle size is preferably 1 to 80 μm, and more preferably 3 to 50 μm, from the standpoints of dispersibility and thin layer formability.

In the pressure-sensitive adhesive sheet of the present invention, the thermal-expandable fine particles preferably have strength that does not burst until a volume expansion ratio becomes 5 times or more and particularly 10

times or more, from the standpoint of efficiently leading to decrease of the pressure-sensitive adhesive force by a thermal treatment. In the case of using thermal-expandable fine particles that burst at low volume expansion ratio (for example, thermal-expandable fine particles that burst at a volume expansion ratio of less than 5 times) or unmicroencapsulated thermal expansion agent (thermally expanding agent), even though heat treatment is conducted, a contact area between a pressure-sensitive adhesive sheet and an adherend cannot sufficiently be decreased, and good peelability is difficult to obtain. The volume expansion ratio is obtained by the following formula.

Volume expansion ratio

= (Volume of thermal-expandable microsphere after heating) / (Volume of thermal-expandable microsphere before heating)

In the thermal-expandable fine particle-containing pressure-sensitive adhesive composition, the content of the thermal-expandable fine particles varies depending on the kind thereof, and is not particularly limited. The content of the thermal-expandable fine particles is preferably 10 to 200 parts by weight, more preferably 20 to 125 parts by weight, further preferably 25 to 100 parts by weight, and most preferably 25 to 80 parts by weight, per 100 parts by weight of the monomer mixture. Where the content of the thermal-expandable fine particles is less than 10 parts by weight, the contact area between a pressure-sensitive adhesive sheet and an adherend may not sufficiently be decreased when a heat treatment has been conducted to the pressure-sensitive adhesive sheet. On the other hand, where the content of the thermal-expandable fine particles exceeds 200 parts by weight, cohesive failure may easily occur in a thermal-expandable fine particle-containing pressure-sensitive adhesive layer formed from the thermal-expandable fine particle-containing pressure-sensitive adhesive composition.

The thermal-expandable fine particle-containing pressure-sensitive adhesive composition preferably further contains a polymerization initiator such as a thermal polymerization initiator or a photopolymerization initiator, in addition to the monomer mixture or its partially polymerized product, and the thermal-expandable fine particles. When the thermal-expandable fine particle-containing pressure-sensitive adhesive composition contains a polymerization initiator such as a thermal polymerization initiator or a photopolymerization initiator, a curing reaction by heat or an active energy ray can be utilized in forming the thermal-expandable fine particle-containing pressure-sensitive adhesive layer from the thermal-expandable fine particle-containing pressure-sensitive composition. As a result, the thermal-expandable fine particle-containing pressure-sensitive adhesive layer can be obtained by curing the thermal-expandable fine particle-containing pressure-sensitive adhesive composition in the state that the thermal-expandable fine particles are blended. In other words, the thermal-expandable fine particle-containing pressure-sensitive adhesive layer having a constitution that the thermal-expandable fine particles are stably contained can easily be obtained from the thermal-expandable fine particle-containing pressure-sensitive adhesive composition containing a polymerization initiator, in the pressure-sensitive adhesive sheet of the present invention. The photopolymerization initiator is preferred as the polymerization initiator as described hereinafter. Therefore, in the pressure-sensitive adhesive sheet of the present invention, the thermal-expandable fine particle-containing pressure-sensitive adhesive layer having the constitution that the thermal-expandable fine particles are stably contained can easily be obtained from the thermal-expandable fine particle-containing pressure-sensitive adhesive composition containing a photopolymerization initiator, utilizing a polymerization reaction (photocuring reaction) using an active energy ray. In the thermal-expandable fine particle-containing pressure-sensitive adhesive composition, the polymerization initiator may be contained alone or in combination of two or more thereof.

In particular, the polymerization initiator is preferably a photopolymerization initiator from the standpoint that curing time (polymerization time) for forming the thermal-expandable fine particle-containing pressure-sensitive adhesive layer from the thermal-expandable fine particle-containing pressure-sensitive adhesive composition can be shortened. Examples of the active energy ray irradiated in utilizing the curing reaction by an active energy ray include ionizing radiations such as $\alpha$ -ray, $\beta$-ray, $\gamma$-ray, neutron ray and electron ray, and ultraviolet rays. Of those, ultraviolet rays are preferred. Irradiation energy and irradiation time of the active energy ray are not particularly limited, and are appropriately selected from the ranges unless they impair the polymerization reaction.

The photopolymerization initiator is not particularly limited, and examples thereof include benzoin ether type photopolymerization initiator, acetophenone type photopolymerization initiator, $\alpha$ -ketol type photopolymerization initiator, $\alpha$-aminoketone type photopolymerization initiator, acylphosphine oxide type photopolymerization initiator, aromatic sulfonyl chloride type photopolymerization initiator, photoactive oxime type photopolymerization initiator, benzoin type photopolymerization initiator, benzyl type photopolymerization initiator, benzophenone type photopolymerization initiator, ketal type photopolymerization initiator, and thioxanthone type photopolymerization initiator.

Specifically, examples of $\alpha$-hydroxyketone ($\alpha$-ketol) type photopolymerization initiator include 1-hydroxy-cyclohexyl-phenylketone (trade name: IRGACURE 184, manufactured by BASF Japan), 2-hyeroxy-2-methyl-1-phenyl-propan-1-one (trade name: DAROCURE 1173, manufactures by BASF Japan), and 1-[4-(2-hydroxyethoxy)-phenyl]-2-hydroxy-2-methyl-1-propan-1-one (trade name: IRGACURE 2959, manufactured by BASF Japan). Examples of α-aminoketone type photopolymerization initiator include 2-methyl-1-[4-(methylthio)phenyl]-2-morpholino-propan-1-one (trade name: IRGACURE 907, manufactured by BASF Japan) and 2-benzyl-2-dimethylamino-1-(4-morpholinophenyl)-butanone-1 (trade name: IRGACURE 369, manufactured by BASF Japan). Examples of acylphosphine oxide type photopolymerization initiator include 2,4,6-trimethylbenzoyldiphenylphosphine oxide (trade name: LUCIRIN TPO, manufactured by BASF Japan). Examples of benzoin ether type photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one, and anisol methyl ether. Examples of acetophenone type photopolymerization initiator include 2,2-diethoxyacetophenone, 2,2-dimethoxy-2-phenyl acetophenone, 1-hydroxycyclohexylphenyl ketone, 4-phenoxydichloroacetophenone, and 4-t-butyl-dichloroacetophenone. Examples of aromatic sulfonyl chloride type photopolymerization initiator include 2-naphthalene sulfonyl chloride. Examples of photoactive oxime type photopolymerization initiator include 1-phneyl-1,1-propanedion-2-(o-ethoxycarbonyl)-oxime. Examples of benzoin type photopolymerization initiator include benzoin. Examples of benzyl type photopolymerization initiator include benzyl. Examples of benzophenone type photopolymerization initiator include benzophenone, benzoylbenzoic acid, 3,3'-dimethyl-4-methoxybenzophenone, polyvinylbenzophenone, and α-hydroxycyclohexyl phenyl ketone. Examples of ketal type photopolymerization initiator include benzyl dimethyl ketal and 2,2-dimethoxy-1,2-diphenylethan-1-one (trade name: IRGACURE 651, manufactured by BASF Japan). Examples of thioxanthone type photopolymerization initiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone.

The content of the polymerization initiator in the thermal-expandable fine particle-containing pressure-sensitive adhesive composition varies depending on the kind thereof and is not particularly limited. In the case of the photopolymerization initiator, the content thereof is preferably 0.001 to 5 parts by weight, more preferably 0.01 to 5 parts by weight, and further preferably 0.05 to 3 parts by weight, per 100 parts by weight of the monomer mixture. Where the content of the photopolymerization initiator in the thermal-expandable fine particle-containing pressure-sensitive adhesive composition is less than 0.001 parts by weight, curing time when forming a pressure-sensitive adhesive layer may become long. On the other hand, where the content the photopolymerization initiator in the thermal-expandable fine particle-containing pressure-sensitive adhesive composition exceeds 5 parts by weight, a molecular weight of a base polymer in the pressure-sensitive adhesive layer formed may be decreased, leading to occurrence of variation of adhesive characteristic.

The thermal-expandable fine particle-containing pressure-sensitive adhesive composition to be form the thermal-expandable fine particle-containing pressure-sensitive adhesive layer of the pressure-sensitive adhesive layer of the present invention, preferably further contains a monomer having at least two ethylenically unsaturated bonds in its molecule, from the standpoint of adjusting elasticity and flexibility of the thermal-expandable fine particle-containing pressure-sensitive adhesive layer or increasing cohesive force of the thermal-expandable fine particle-containing pressure-sensitive adhesive layer to thereby improve adhesive force. The monomer having at least two ethylenically unsaturated bonds in its molecule is preferably contained also from the standpoint of expandability of the thermal-expandable fine particle-containing pressure-sensitive adhesive layer. In the present application, the "monomer having at least two ethylenically unsaturated bonds in its molecule" is sometimes referred to as a "polyfunctional monomer".

The (a2) and (a3) above are not included in the polyfunctional monomer.

The polyfunctional monomer is preferably a monomer having at least two ethylenically unsaturated bonds in its molecule, in which at least one ethylenically unsaturated bond is an ethylenically unsaturated bond in a (meth)acryloyl group. In the present application, the "monomer having at least two ethylenically unsaturated bonds in its molecule, in which at least one ethylenically unsaturated bond is an ethylenically unsaturated bond in a (meth)acryloyl group" is sometimes referred to as a "polyfunctional (meth)acrylate". In the polyfunctional (meth)acrylate, all of the ethylenically unsaturated bonds in the molecule may be ethylenically unsaturated bonds in (meth)acryloyl groups.

Examples of the polyfunctional (meth)acrylate include trimethylolpropane tri(meth)acrylate, tetramethylolmethane tetraacrylate, penthaerythritol di(meth)acrylate, pentaerythritol tri(meth)acrylate, pentaerythritol tetra(meth)acrylate, 1,2-ethyleneglycol di(meth)acrylate, 1,4-butyreneglycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(meth)acrylate, polyethyleneglycol di(meth)acrylate, hexanediol di(meth)acrylate, (poly)ethyleneglycol di(meth)acrylate, (poly)propyleneglycol di(meth)acrylate, neopentylglycol di(meth)acrylate, tetramethylolmethane tri(meth)acrylate, allyl (meth)acrylate, vinyl (meth)acrylate, epoxy acrylate, polyester acrylate, urethane acrylate, and reactive hyperbranched polymers having a plurality of (meth)acryloyl groups at the terminals (for example, trade name: CN2300, CN2301 and CN2320, manufactured by SARTOMER).

In the thermal-expandable fine particle-containing pressure-sensitive adhesive composition, the content of the polyfunctional monomer is not particularly limited. Specifically, in the case where the thermal-expandable fine particle-containing pressure-sensitive adhesive composition contains the polyfunctional (meth)acrylate, the content of the polyfunctional (meth)acrylate is preferably 5 parts by weight or less (for example, 0.001 to 5 parts by weight), more preferably 3 parts by weight or less (for example, 0.001 to 3 parts by weight), and further preferably 1 part by weight or less (for example, 0.001 to 1 part by weight), per 100 parts by weight of the monomer mixture. When the content of the polyfunctional (meth)acrylate is too large in the thermal-expandable fine particle-containing pressure-sensitive adhesive composition (for example, exceeding 5 parts by weight), flexibility of the pressure-sensitive adhesive layer may be impaired, and this may adversely affect repelling resistance of the pressure-sensitive adhesive sheet. On the other hand, when the content of the polyfunctional (meth)acrylate is too small in the thermal-expandable fine particle-containing pressure-sensitive adhesive composition, sufficient cohesive force may not be obtained in the pressure-sensitive adhesive layer, and this may adversely affect adhesion reliability of the pressure-sensitive adhesive sheet.

In the pressure-sensitive adhesive sheet of the present invention, the polyfunctional monomer (particularly, polyfunctional (meth)acrylate) is preferably contained by appropriately adjusting such that a solvent-insoluble content (gel fraction) of the thermal-expandable fine particle-containing pressure-sensitive adhesive layer described hereinafter becomes a desired solvent-insoluble content.

As necessary, the thermal-expandable fine particle-containing pressure-sensitive adhesive composition may further contain additives unless it impairs the advantageous effects of the present invention. Examples of the additives include crosslinking agents such as isocyanate type crosslinking agent or epoxy type crosslinking agent; tackifiers such as rosin derivative resin, polyterpene resin, petroleum resin, or oil-soluble phenol resin; plasticizers; fillers; anti-aging agents; and surfactants. The thermal-expandable fine particle-containing pressure-sensitive adhesive composition may contain the additives alone or as mixtures of two or more thereof.

A method for preparing the thermal-expandable fine particle-containing pressure-sensitive adhesive composition is not particularly limited. For example, thermal-expandable fine particles, and components added as necessary (for example, the photopolymerization initiator, the polyfunctional monomer such as polyfunctional (meth)acrylate, additives and the like) may be blended in the monomer mixture or its partially polymerized product.

More specifically, the thermal-expandable fine particle-containing pressure-sensitive adhesive layer of the present invention can be formed by applying the thermal-expandable fine particle-containing pressure-sensitive adhesive composition to an appropriate support such as a release film to obtain a thermal-expandable fine particle-containing pressure-sensitive adhesive composition layer, and, if necessary, drying or curing (for example, curing by heat or an active energy ray) the thermal-expandable fine particle-containing pressure-sensitive adhesive composition layer. In the case of utilizing curing (photocuring) by an active energy ray, photopolymerization reaction is inhibited by oxygen in the air. Therefore, oxygen is preferably blocked by, for example, attaching a release film (a separator) to the pressure-sensitive adhesive composition layer or photocuring under nitrogen atmosphere.

In particular, from the standpoint of obtaining a structure in which the thermal-expandable fine particles are stably contained, the thermal-expandable fine particle-containing pressure-sensitive adhesive layer is preferably formed from the thermal-expandable fine particle-containing pressure-sensitive adhesive composition containing the polymerization initiator (polymerization initiator such as photopolymerization initiator or thermal polymerization initiator) by utilizing the curing reaction by heat or an active energy ray. Furthermore, from the standpoint of obtaining a thick pressure-sensitive adhesive layer, the thermal-expandable fine particle-containing pressure-sensitive adhesive layer is preferably formed from the thermal-expandable fine particle-containing pressure-sensitive adhesive composition containing the photopolymerization initiator by utilizing the curing reaction by an active energy ray.

The solvent-insoluble content (gel fraction) in the thermal-expandable fine particle-containing pressure-sensitive adhesive layer of the pressure-sensitive adhesive sheet of the present invention is not particularly limited, but is preferably 50 to 99% by weight, and more preferably 60 to 95% by weight. When the solvent-insoluble content is less than 50% by weight, the pressure-sensitive adhesive layer may be difficult to be peeled off from an adherend by the expansion of the thermal-expandable fine particles. When the solvent-insoluble content is more than 99% by weight, wettability of the thermal-expandable fine particle-containing pressure-sensitive adhesive layer may be deteriorated, and adhesion may become difficult.

The solvent-insoluble content of the thermal-expandable fine particle-containing pressure-sensitive adhesive layer means a "proportion of solvent-insoluble components" in the pressure-sensitive adhesive layer, and is a value calculated by the following "measurement method of solvent-insoluble content of pressure-sensitive adhesive layer". The solvent-insoluble content in the pressure-sensitive adhesive layer includes the thermal-expandable fine particles insoluble in a solvent.

Measurement method of solvent-insoluble content in pressure-sensitive adhesive layer

About 1 g of a pressure-sensitive adhesive layer is weighed, and this is used as a sample. The sample is precisely weighed to obtain its weight, and the weight is taken as "weight of a pressure-sensitive adhesive layer before dipping". The sample is dipped in 40 g of ethyl acetate for 7 days, and all of components insoluble in ethyl acetate

(insoluble part) is recovered. The insoluble part recovered is dried at 130°C for 2 hours, and its weight is obtained. The weight is used as "dry weight of insoluble part". The numerical values obtained are substituted in the following equation, and calculation is made.

Solvent-insoluble content (% by weight) of pressure-sensitive adhesive layer

= [(dry weight of insoluble part) / (weight of pressure-sensitive adhesive layer before dipping)] × 100

The thickness of the thermal-expandable fine particle-containing pressure-sensitive adhesive layer of the pressure-sensitive adhesive sheet of the present invention is appropriately selected according to use purpose, reduction in adhesive force by heating, and the like. In order to keep smoothness of the surface of the thermal-expandable fine particle-containing pressure-sensitive adhesive layer, the thickness is preferably the maximum particle size or more of the thermal-expandable fine particles (particularly, thermal-expandable microspheres). From the standpoint of obtaining good peelability/dismantlability in the pressure-sensitive adhesive layer of the present invention, larger thickness is preferred in the thermal-expandable fine particle-containing pressure-sensitive adhesive layer because the absolute amount of the thermal-expandable fine particles in the thermal-expandable fine particle-containing pressure-sensitive adhesive layer is increased with the increase in the thickness of the thermal-expandable fine particle-containing pressure-sensitive adhesive layer. However, when the thickness of the thermal-expandable fine particle-containing pressure-sensitive adhesive layer is increased, the absolute amount of the thermal-expandable fine particle is increased in the thermal-expandable fine particle-containing pressure-sensitive adhesive layer, and thus, the proportion of the adhesive components in the thermal-expandable fine particle-containing pressure-sensitive adhesive layer is decreased, and therefore adhesive force and adhesion reliability in the pressure-sensitive adhesive sheet of the present invention may be decreased.

The thickness of the thermal-expandable fine particle-containing pressure-sensitive adhesive layer is preferably 1 to 300 μm, more preferably 10 to 250 μm, and further preferably 20 to 200 μm, from the standpoint of achieving both adhesion reliability and peelability/dismantlability in the pressure-sensitive adhesive sheet of the present invention. The thermal-expandable fine particle-containing pressure-sensitive adhesive layer of the pressure-sensitive adhesive sheet of the present invention may have a single layer structure or a laminate structure.

(Viscoelastic layer)

The pressure-sensitive adhesive sheet of the present invention has at least a viscoelastic layer containing bubbles and/or fine particles. The viscoelastic layer is a layer having viscoelasticity. In the pressure-sensitive adhesive sheet of the present invention, the viscoelastic layer acts to improve adhesive characteristics of the pressure-sensitive adhesive sheet.

The viscoelastic layer is obtained by a composition which is used to form a viscoelastic layer. In the present invention, the term "composition which is used to form a viscoelastic layer" is sometimes referred to as a "viscoelastic composition". The term "viscoelastic composition" encompasses the meaning of a composition which is used to form a viscoelastic body.

The viscoelastic layer is not particularly limited, but is preferably a polymer layer.

The polymer layer may be a pressure-sensitive adhesive layer. A pressure-sensitive adhesive which is used to form the pressure-sensitive adhesive layer is not particularly limited. Examples of the pressure-sensitive adhesive include acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives. Of those, acrylic pressure-sensitive adhesives are preferred. The pressure-sensitive adhesives may be used alone or in combination of two or more thereof.

The viscoelastic layer may be a pressure-sensitive adhesive layer containing bubbles and/or fine particles. The viscoelastic layer may be the above thermal-expandable fine particle-containing pressure-sensitive adhesive layer which contains bubbles. In the pressure-sensitive adhesive sheet of the present invention, when the viscoelastic layer is a pressure-sensitive adhesive layer, the surface provided by the viscoelastic layer can be utilized as a pressure-sensitive adhesive surface.

The viscoelastic composition which is used to form a polymer layer as the viscoelastic layer may have any form, and may be an active energy ray curing type viscoelastic composition, a thermosetting type viscoelastic composition,

a solvent type (solution type) viscoelastic composition, an emulsion type viscoelastic composition, a thermal fusion type (hot melt type) viscoelastic composition, and the like.

The viscoelastic composition which is used to form the polymer layer is particularly preferably a viscoelastic composition comprising, as the essential component, a mixture of monomers for forming a polymer (sometimes referred to as a "monomer mixture) or its partially polymerized product, from the standpoints of easiness of incorporating fine particles and bubbles, workability at the time of preparation of a viscoelastic composition, and the like. The term "monomer mixture" means a mixture consisting of monomer components for forming a polymer. The term "partially polymerized product" means a composition in which at least one component of the constituents of a monomer mixture is partially polymerized.

The polymer constituting the polymer layer is not particularly limited. Examples of the polymer include acrylic polymers, rubber polymers, vinyl alkyl ether polymers, silicone polymers, polyester polymers, polyamide polymers, urethane polymers, fluorine polymers, and epoxy polymers. The polymer may be used alone or in combination of two or more thereof.

Of those polymers, acrylic polymers are preferred from the standpoints of weather resistance and easiness of designing of a polymer suitable for uses.

The viscoelastic layer of the pressure-sensitive adhesive sheet of the present invention is more preferably an acrylic polymer layer containing bubbles and/or fine particles. The acrylic polymer layer containing bubbles and/or fine particles as the viscoelastic layer is preferably formed from a viscoelastic composition comprising: an acrylic monomer mixture or its partially polymerized product, as the essential component; and bubbles and/or fine particles.

The acrylic polymer is a polymer comprising an acrylic monomer as the essential monomer component. The acrylic polymer may be a homopolymer and may be a copolymer.

In the acrylic polymer, the proportion of the acrylic monomer in the entire monomer components (100% by weight) which form the acrylic polymer is not particularly limited. The proportion is preferably 50% by weight or more (for example, 50 to 100% by weight), more preferably 60% by weight or more (for example, 60 to 100% by weight), and further preferably 80% by weight or more (for example, 80 to 100% by weight).

The acrylic monomer is not particularly limited, but alkyl (meth)acrylate having 2 to 18 carbon atoms in its alkyl moiety (straight chain or branched chain alkyl group). Examples of the alkyl (meth)acrylate having 2 to 18 carbon atoms in its alkyl moiety include ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, isopentyl (meth)acrylate, n-hexyl (meth)acrylate, n-heptyl (meth)acrylate, n-octyl (meth)acrylate, isooctyl (meth)acrylate, 2-ethylhexyl (meth) acrylate, isononyl (meth)acrylate, n-decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, and isostearyl (meth)acrylate. The term "(meth)acrylate" means "acrylate and/or methacrylate", and other is the same. The acrylic monomer may be used alone or in combination of two or more thereof.

In the acrylic polymer, other than the alkyl (meth)acrylate having 2 to 18 carbon atoms in its alkyl moiety, a copolymerizable monomer may be used as the monomer component which is used to form the acrylic polymer. Examples of the copolymerizable monomer include: carboxyl group-containing monomers such as acrylic acid, methacrylic acid, carboxyethyl acrylate, carboxypentyl acrylate, itaconic acid, maleic acid, and crotonic acid; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth) acrylate, and (4-hydroxymethylcyclohexyl)-methacrylate; acid anhydride monomers such as maleic anhydride and itaconic anhydride; sulfonate group-containing monomers such as 2-acrylamido-2-methylpropane-sulfonic acid and sulfopropyl acrylate; phosphate group-containing monomers such as 2-hydroxyethylacryloyl phosphate; amide monomers including N-substituted (meth)acrylamides such as (meth)acrylamide and N-methylol acrylamide; succinimide monomers such as N-(meth)acryloyloxymethylene succinimide, N-(meth)acryloyl-6-oxyhexamethylene succinimide, and N-(meth) acryloyl-8-oxyoctamethylene succinimde; vinyl monomers such as vinyl acetate, N-vinylpyrrolidone, N-vinylcarboxylic acid amides, styrene, and N-vinylcaprolactam; cyanoacrylate monomers such as acrylonitrile and methacrylonitrile; acrylic acid ester monomers such as glycidyl (meth)acrylate, tetrahydrofurufuryl (meth)acrylate, polyethyleneglycol (meth)acrylate, polypropyleneglycol (meth)acrylate, fluorine (meth)acrylate, silicon (meth)acrylate, and 2-methoxyethyl acrylate; acrylic monomers other than the alkyl (meth)acrylate having 2 to 18 carbon atoms in its alkyl moiety, such as methyl (meth)acrylate; and alicyclic acrylates such as isobornyl (meth)acrylate. The polymerizable monomer may be used alone or in combination of two or more thereof.

The copolymerizable monomer is preferably carboxyl group-containing monomer and hydroxyl group-containing monomer, and particularly preferably acrylic acid, from the standpoint of balance in adhesive characteristics.

In the acrylic polymer, the proportion of the copolymerizable monomer in the entire monomer components (100% by weight) used to form the acrylic polymer is not particularly limited, but is preferably 0.1 to 50% by weight, more preferably 0.1 to 40% by weight, and further preferably 0.5 to 20% by weight.

The viscoelastic composition comprising the acrylic monomer mixture or its partially polymerized product as the essential component, preferably contains polyfunctional (meth)acrylate, from the standpoint of easiness of adjusting gel fraction of the viscoelastic layer and the standpoint of requiring short period of time to complete a crosslinking reaction and not particularly requiring an aging. Examples of the polyfunctional (meth)acrylate include trimethylolpropane tri(meth) acrylate, tetramethylolmethane tetra(meth)acrylate, pentaerythritol di(meth)acrylate, pentaerythritol tri(meth)acrylate, pentaerythritol tetra(meth)acrylate, 1,2-ethyleneglycol di(meth)acrylate, 1,4-butyleneglycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(meth)acrylate, polyethyleneglycol di(meth)acrylate, hexanediol di(meth)acrylate, (poly)ethyleneglycol di(meth)acrylate, (poly)propyleneglycol di(meth)acrylate, neopentylglycol di(meth)acrylate, tetramethylolmethane tri (meth)acrylate, allyl (meth)acrylate, vinyl (meth)acrylate, epoxy acrylate, polyester acrylate, urethane acrylate, and reactive hyperbranched polymer having a plurality of (meth)acryloyl groups at the terminals (for example, trade name: CN2300, CN2301 and CN2320, manufactured by SARTOMER). The term "(meth)acryloyl group" means "acryloyl group and/or methacryloyl group", and other is the same.

The content of the polyfunctional (meth)acrylate is not particularly limited. For example, the content is preferably 0.001 to 5 parts by weight, more preferably 0.001 to 3 parts by weight, and further preferably 0.01 to 2 parts by weight, per 100 parts by weight of the acrylic monomer mixture. When the content exceeds 5 parts by weight, cohesive force of a viscoelastic layer may become too high, and viscoelasticity may be decreased. On the other hand, when the content is too small (for example, less than 0.001 part by weight), cohesive force of a viscoelastic layer may be decreased.

In the case that the viscoelastic layer of the pressure-sensitive adhesive sheet of the present invention contains fine particles, examples of the fine particles include metal particles such as copper, nickel, aluminum, chromium, iron and stainless steel, and their metal oxide particles; carbide particles such as silicon carbide, boron carbide and nitrogen carbide; nitride particles such as aluminum nitride, silicon nitride and boron nitride; ceramic particles represented by oxides of alumina, zirconium and the like; inorganic fine particles such as calcium carbonate, aluminum hydroxide, glass, and silica; natural raw material particles such as volcanic ash and sand; and polymer particles such as polystyrene, polymethyl methacrylate, phenolic resin, benzoguanamine resin, urea resin, silicon resin, nylon, polyester, polyurethane, polyethylene, polypropylene, polyamide, and polyimide.

Examples of the fine particles also include hollow inorganic microspheres and hollow organic microspheres. Examples of the hollow inorganic microspheres include glass-made hollow balloons such as hollow glass balloon; metal compound-made hollow balloons such as hollow alumina balloon; and porcelain-made hollow balloons such as hollow ceramic balloon. Examples of the hollow organic microspheres include resin-made hollow balloons such as hollow acrylic balloon and hollow vinylidene chloride balloon.

Examples of the commercially available hollow glass balloon include trade name: GLASS MICROBALLOON (manufactured by Fuji Silysia Chemical Ltd.) and trade name: SEILAX FINE BVALLOON (manufactured by Fine Balloon K.K.).

Examples of the fine particles further include thermal-expandable fine particles contained in the thermal-expandable fine particle-containing pressure-sensitive adhesive layer.

Above all, the fine particles are preferably hollow inorganic fine microspheres and hollow organic microspheres, more preferably hollow inorganic microspheres, and further preferably hollow glass balloon, from the standpoints of polymerization efficiency of the viscoelastic composition comprising the monomer mixture or its partially polymerized product as the essential component, weight of fine particles and the like. Particularly, when hollow glass balloon is used, viscoelasticity, particularly viscoelasticity at high temperature, can be improved without impairing other properties such as shear force and retention force.

Various surface treatments (for example, surface tension lowering treatment by silicone compound or fluorine compound) may be applied to the surface of the fine particles.

The particle size (average particle size) of the fine particles is not particularly limited. The particle size is preferably 1 to 500 $\mu$m, more preferably 5 to 200 $\mu$m, further preferably 10 to 100 $\mu$m, and most preferably 30 to 100 $\mu$m.

The specific gravity (true density) of the fine particles is not particularly limited. The specific gravity is preferably 0.01 to 1.8 g/cm$^3$, and more preferably 0.02 to 1.5 g/cm$^3$. When the specific gravity of the fine particles is smaller than 0.01 g/cm$^3$, at the time of blending and mixing the fine particles with the viscoelastic composition comprising the monomer mixture or its partially polymerized product as the essential component, floating of the fine particles may become increased, and the fine particles may be difficult to be uniformly dispersed. Furthermore, the problem easily occurs in strength, and the fine particles may be broken. On the other hand, when the specific gravity of the fine particles is larger than 1.8 g/cm$^3$, the polymerization efficiency of the viscoelastic composition comprising the monomer mixture or its partially polymerized product as the essential component, may be decreased (for example, transmission of an active energy ray (particularly, ultraviolet rays) is decreased, and the efficiency of a photocuring reaction may be decreased). Furthermore, the weight of the pressure-sensitive adhesive sheet is increased, and workability may be decreased. In particular, in the case of using hollow inorganic fine particles as the fine particles, the true density is preferably 0.1 to 0.6 g/cm$^3$, and in the case of using hollow organic fine particles, the true density is preferably 0.01 to 0.05 g/cm$^3$.

The proportion of the fine particles in the viscoelastic layer is not particularly limited. The proportion is preferably 5 to 50% by volume, more preferably 10 to 45% by volume, and further preferably 15 to 40% by volume, based on the total volume (100% by volume) of the viscoelastic layer. When the proportion of the fine particles is less than 5% by volume, there may be some cases that the characteristics introduced by containing the fine particles in the viscoelastic layer is not sufficiently obtained. On the other hand, when the proportion of the fine particles exceeds 50% by volume, there may be some cases that viscoelasticity of the viscoelastic layer is decreased.

More specifically, in the case of the acrylic polymer layer, the content of the fine particles in the viscoelastic composition comprising the acrylic monomer mixture or its partially polymerized product as the essential component is not particularly limited. The content is preferably 1 to 30 parts by weight, and more preferably 3 to 20 parts by weight, per 100 parts by weight of the acrylic monomer mixture.

The viscoelastic layer of the pressure-sensitive adhesive sheet of the present invention preferably contains bubbles. The bubbles are not particularly limited, and may be closed cell type bubbles and may be semi-closed cell type bubbles. The closed cell type bubbles are preferred. For example, the above acrylic polymer layer may contain only closed cell type bubbles, and may contain bubbles in a mixed state of closed cell type bubbles and semi-closed cell type bubbles.

The shape of the bubbles is not particularly limited. The shape is preferably spherical shape, and particularly preferably true spherical shape. The average bubble size (diameter) of the bubbles is not particularly limited. The average bubble size is, for example, preferably 1 to 1,000 μm, more preferably 10 to 500 μm, and further preferably 30 to 300 μm.

The bubble component (gas component forming bubbles: bubble-forming gas) contained in the bubbles is not particularly limited. Examples of the bubble component include an inert gas such as nitrogen, carbon dioxide or argon; and air. The bubble-forming gas may be a mixed gas. In the case that a polymerization reaction and the like are conducted after mixing the bubble-forming gas, it is important to use a bubble-forming gas that does not impair the reaction. Of those, nitrogen is preferred as the bubble-forming gas from standpoints of non-inhibition to the reaction and economical costs.

The mixed amount (content) of the bubbles is not particularly limited. For example, the mixed amount is preferably 3 to 30% by volume, more preferably 8 to 26% by volume, and further preferably 13 to 22% by volume, based on the total volume (100% by volume) of the viscoelastic layer. When the mixed amount of the bubbles in the viscoelastic layer is less than 3% by volume, there may be some cases that the effect introduced by mixing the bubbles in the viscoelastic layer is not obtained. On the other hand, when the mixed amount of the bubbles in the viscoelastic layer is larger than 30% by volume, there may be some cases that bubbles penetrating the viscoelastic layer are generated, and as a result, viscoelasticity of the viscoelastic layer may be decreased and the exterior appearance of the viscoelastic layer may be deteriorated.

The viscoelastic layer may contain additives as other component. That is, as necessary, the additives may be contained in the viscoelastic composition from the standpoint of obtaining desired characteristics in the viscoelastic layer. The additives may be used alone or in combination of two or more thereof.

Examples of the additives include polymerization initiators such as thermal polymerization initiator and photopolymerization initiator. When the polymerization initiator is contained in the viscoelastic composition comprising the monomer mixture or its partially polymerized product as the essential component, curing reaction (polymerization reaction) by heat or an active energy ray can be utilized. As a result, a structure in which fine particles and/or bubbles are stably contained in the polymer layer can be easily obtained.

The polymerization initiator is preferably the photopolymerization initiator from the standpoint that polymerization time can be shortened. The polymerization initiator may be used alone or in combination of two or more thereof.

The photopolymerization initiator is not particularly limited. Examples of the photopolymerization initiator include benzoin ether type photopolymerization initiators, acetophenone type photopolymerization initiators, α-ketol type photopolymerization initiators, aromatic sulfonyl chloride type photopolymerization initiators, photoactive oxime type photopolymerization initiators, benzoin type photopolymerization initiators, benzyl type photopolymerization initiators, benzophenone type photopolymerization initiators, ketal type photopolymerization initiators and thioxanthone type photopolymerization initiators.

Specifically, examples of the benzoin ether type photopolymerization initiator include benzoin methyl ether, benzoin ethyl ether, benzoin propyl ether, benzoin isopropyl ether, benzoin isobutyl ether, 2,2-diemthoxy-1,2-diphenylethan-1-one, and anisol methyl ether. Examples of the acetophenone type photopolymerization initiator include 2,2-diethoxyacetophenone, 2,2-dimethoxy-2-phenylacetophenone, 1-hydroxycyclohexylphenyl ketone, 4-phenoxydichloroacetophenone, and 4-t-butyl-dichloroacetophenone. Examples of the α-ketol type photopolymerization initiator include 2-methyl-2-hydroxypropiophenone and 1-[4-(2-hydroxyethyl)-phenyl]-2-hydroxy-2-methylpropan-1-one. Examples of the aromatic sulfonyl chloride type photopolymerization initiator include 2-naphthalenesulfonyl chloride. Examples of the photoactive oxime type photopolymerization initiator include 1-phenyl-1,1-propanedione-2-(o-ethoxycarbonyl)-oxime. Examples of the benzoin type photopolymerization initiator include benzoin. Examples of the benzyl type photopolymerization initiator include benzyl. Examples of the benzophenone type photopolymerization initiator include benzophenone, benzoylbenzoic acid, 3,3'-dimethyl-4-methoxybenzophenone, polyvinylbenzophenone, and α-hydroxycyclohexyl phenyl ketone. Examples of the ketal type photopolymerization initiator include benzyl dimethyl ketal. Examples of the thioxanthone type photopolymerization initiator include thioxanthone, 2-chlorothioxanthone, 2-methyl thioxanthone, 2,4-dimethyl thioxanthone, isopropyl thioxanthone, 2,4-dichlorothioxanthone, 2,4-diethyl thioxanthone, 2,4-diisopropyl thioxanthone, and dodecyl thioxanthone.

The content of the photopolymerization initiator is not particularly limited. For example, in the case that the viscoelastic layer is the acrylic polymer layer, the content of the photopolymerization initiator in the viscoelastic composition comprising the acrylic monomer or its partially polymerized product as the essential component, is preferably 0.001 to 5 parts by weight, more preferably 0.01 to 5 parts by weight, and further preferably 0.05 to 3 parts by weight, per 100 parts by weight of the acrylic monomer mixture.

Examples of the thermal polymerization initiator include azo type thermal polymerization initiators such as 2,2'-azobisisobutyronitrile, 2,2'-azobis-2-methylbtyronitrile, dimethyl 2,2'-azobis(2-methylpropionate), 4,4'-azobis-4-cyanovalerianic acid, azobisisovaleronitrile, 2,2'-azobis(2-amidinopropane)dihydrochloride, 2,2'-azobis[2-(5-methyl-2-imidazolin-2-yl)propane]dihydrochloride, 2,2'-azobis(2-methylpropioneamidine)disulfate, and 2,2'-azobis(N,N'-dimethyleneisobutylamidine)dihydrochloride; peroxide type thermal polymerization initiators such as dibenzoyl peroxide and tert-butyl permaleate; and redox type thermal polymerization initiators. The content of the thermal polymerization initiator is not particularly limited so long as the content is the conventional range usable as the thermal polymerization initiator.

Examples of the additives further include surfactants. In the case that the viscoelastic layer of the pressure-sensitive adhesive sheet of the present invention contains fine particles and/or bubbles, when the surfactant is contained in the viscoelastic layer, adhesion between the fine particles and a material constituting the viscoelastic layer (for example, the polymer) can be improved, frictional resistance between the fine particles and a material constituting the viscoelastic layer (for example, the polymer) can be reduced, and fine bubbles can stably be contained in the viscoelastic layer.

Examples of the surfactant include fluorine type surfactants, silicone type surfactants, nonionic surfactants, and ionic surfactants.

Of these, in the case that the viscoelastic layer contains bubbles, the surfactant is preferably a fluorine type surfactant, and more preferably a fluorine type surfactant having an oxy $C_{2-3}$ alkylene group and a fluorinated hydrocarbon group in its molecule. When the viscoelastic composition contains the fluorine type surfactant, the viscoelastic composition has excellent bubble mixing property and can suppress the union of bubbles. Furthermore, the fluorine type surfactant is preferably a nonionic surfactant from the standpoint of dispersibility.

The fluorine type surfactant may be used alone or in combination of two or more thereof. As the fluorine type surfactant, fluorine type surfactants described in JP 2009-120807A, JP 2008-12798A, and JP 2006-022189A are preferably used.

As the fluorine type surfactant, commercially available products may be used. Examples of the commercially available product of the fluorine type surfactant include trade name: FTERGENT 251 and trade name: FTX-218 (manufactured by NEOS Company Limited); trade name: MEGAFAC F-477 and trade name: MEGAFAC F-470 (manufactured by DIC); trade names: SURFLON S-381, S-383, S-393, KH-20 and KH-40 (manufactured by AGS Siemi Chemical Co., Ltd.); trade names: EFTOP EF-352 and EF-801 (manufactured by Jemco Co., Ltd.); and trade name: UNIDYNE TG-656 (manufactured by Daikin Industries, Ltd.).

The content of the surfactant is not particularly limited. For example, in the case that the viscoelastic layer is the acrylic polymer layer, the content (solid content) of the fluorine type surfactant in the viscoelastic composition comprising the acrylic monomer mixture or its partially polymerized product as the main component, is preferably 0.01 to 2 parts by weight, more preferably 0.03 to 1.5 parts by weight, and further preferably 0.05 to 1 part by weight, per 100 parts by weight of the acrylic monomer mixture. When the content is less that 0.01 part by weight, there may be some cases that mixing property of bubbles is decreased, and a sufficient amount of bubbles may be difficult to mix in the viscoelastic composition. On the other hand, when the content exceeds 2 parts by weight, viscoelastic performance of the viscoelastic layer may be decreased.

Examples of the additives further include crosslinking agents (for example, polyisocyanate crosslinking agent, silicone crosslinking agent, epoxy crosslinking agent, and alkyl etherified melamine crosslinking agent), tackifiers (for example, tackifiers that are soild, semi-solid or liquid at ordinary temperatures, such as rosin derivative resin, polyterpene resin, petroleum resin, and oil-soluble phenolic resin), plasticizers, fillers, anti-aging agents, antioxidants, colorants (pigments, dyes and the like), and softening agents.

The viscoelastic composition is preferably adjusted to have a viscosity suitable for coating (generally 0.3 to 40 Pa·s as viscosity measured under the condition of measurement temperature: 25°C in viscosity measurement by B-type viscometer) from the standpoint of its handling property. Furthermore, the viscosity is preferably adjusted also from the standpoint of uniformly mixing bubbles and/or fine particles with good efficiency.

For example, the viscoelastic composition may be adjusted to have a desired viscosity by appropriately blending a thickening polymer. Examples of the thickening polymer include acrylic polymers obtained by copolymerizing the above acrylic monomer with acrylic acid, acrylamide, acrylonitrile, acryloyl morpholine, or the like; styrene-butadiene rubbers

(SBR); isoprene rubbers; styrene-butadiene block copolymers (SBS); ethylene-vinyl acetate copolymers; acrylic rubbers; polyurethanes; and polyesters. The thickening polymer may be used alone or in combination of two or more thereof.

The viscoelastic composition may be adjusted to have a desired viscosity by containing the partially polymerized product of the monomer mixture as the essential component. The reason is that the partially polymerized product of the monomer mixture is a syrup having viscosity. In the partially polymerized product of the monomer mixture, the conversion of the partially polymerized product, the preparation method of the partially polymerized product, and the measurement method of the conversion of the partially polymerized product are the same as in the case of the thermal-expandable fine particle-containing pressure-sensitive adhesive composition. The conversion is preferably 2 to 40% by weight, and more preferably 5 to 20% by weight, although it varies depending on the molecular weight of the moiety of partially polymerized. The partial polymerization is conducted by, for example, irradiating with an active energy ray (particularly, ultraviolet rays) while avoiding the contact with oxygen. The conversion of the partially polymerized product of the monomer mixture is obtained in the same manner as in the case of the thermal-expandable fine particle-containing pressure-sensitive adhesive composition.

As described above, the viscoelastic layer contains bubbles and/or fine particles. A method of introducing the bubbles and/or fine particles in the viscoelastic layer is not particularly limited, but the following method is preferred. The bubbles and/or fine particles are introduced in the viscoelastic composition to obtain a viscoelastic composition containing bubbles and/or fine particles, and a viscoelastic layer is formed from the viscoelastic composition containing bubbles and/or fine particles.

For example, in the case of the polymer layer, the bubbles may be introduced as follows. Bubbles are introduced in the viscoelastic composition, which has a viscosity adjusted by, for example, using the partially polymerized product of the monomer mixture as the essential component, by utilizing the conventional bubble mixing method to obtain a viscoelastic composition containing bubbles, and a polymer layer is formed from the viscoelastic composition containing the bubbles.

The conventional bubble mixing method is not particularly limited, and examples thereof include a method of using an apparatus equipped with: a stator having many fine teeth on a disk having a through-hole at a central part; and a rotor, which faces the stator having teeth, having the similar fine teeth as in the stator on a disk. According to this apparatus, the viscoelastic composition is introduced between teeth on the stator and the teeth on the rotor, and a gas component for forming bubbles (bubble-forming gas) is introduced in the viscoelastic composition through the through-hole while rotating the rotor at high speed, thereby obtaining a viscoelastic composition having a bubble-forming gas finely dispersed and mixed therein.

In order to suppress or prevent unity of bubbles, the viscoelastic layer containing bubbles is preferably prepared by continuously conducting steps of from the mixing of bubbles into the viscoelastic composition to the formation of the viscoelastic layer as a series of steps.

A method of preparing the viscoelastic layer containing bubbles and/or fine particles is not particularly limited, and for example, the preparation method containing the following steps (i) to (iii) is exemplified:

(i) introducing bubbles and/or fine particles in a viscoelastic composition to obtain a viscoelastic composition containing bubbles and/or fine particles;
(ii) applying the viscoelastic composition containing bubbles and/or fine particles to an appropriate support to obtain a viscoelastic composition layer; and
(iii) curing the viscoelastic composition layer to form a viscoelastic layer containing bubbles and/or fine particles.

The solvent-insoluble content (gel fraction) in the viscoelastic layer is not particularly limited, but in the case of the above acrylic polymer layer containing bubbles and fine particles, the solvent-insoluble content is preferably 45 to 99% by weight, and more preferably 70 to 95% by weight. When the solvent-insoluble content is less than 45% by weight, there may be some cases that cohesive force of a viscoelastic layer is decreased and reliability in using at high temperature or over a long period of time can hardly be achieved. When the solvent-insoluble content is more than 99% by weight, there is concern that adhesive characteristics may be deteriorated.

The solvent-insoluble content of the viscoelastic layer means a "proportion of solvent-insoluble components" in the viscoelastic layer, and is obtained by the same method as the "measurement method of solvent-insoluble content of pressure-sensitive adhesive layer" in the above thermal-expandable fine particle-containing pressure-sensitive adhesive layer. The solvent-insoluble content in the viscoelastic layer includes the fine particles insoluble in a solvent.

The thickness of the viscoelastic layer is not particularly limited. In the case of the above polymer layer, from the standpoint of ensuring good viscoelasticity, the thickness is preferably 100 μm or more (for example, 100 to 1500 μm), more preferably 200 μm or more (for example, 200 to 1400 μm), and further preferably 300 μm or more (for example, 300 to 1300 μm). The viscoelastic layer may have a single layer structure or a laminate structure.

As the viscoelastic layer, commercially available products may be used.

(Release film)

For the pressure-sensitive adhesive layer of the present invention, a release film (a separator) may be utilized until the use, for the purpose of protecting the thermal-expandable fine particle-containing pressure-sensitive adhesive layer surface or the viscoelastic layer surface. Further, the release film may be used in preparing the pressure-sensitive adhesive sheet of the present invention. The release film is peeled off at the time of use of the pressure-sensitive adhesive sheet of the present invention.

The release film is not particularly limited. Examples of the release film include bases in which at least one surface thereof has been release-treated by a release agent; low adhesive bases comprising a fluorine polymer (for example, polytetrafluoroethylene, polychlorotrifluoroethylene, polyvinyl fluoride, polyvinylidene fluoride, tetrafluoroethylene-hexafluoropropylene copolymer, or chlorofluoroethylene-vinylidene fluoride copolymer); and low adhesive bases comprising a non-polar polymer (for example, olefin resin such as polyethylene or polypropylene). In the low adhesive bases, both surfaces are utilized as a release surface. On the other hand, in the release-treated bases, a release-treated surface is utilized as a release surface. The release film is formed by the conventional methods.

Examples of a base in the base in which at least one surface has been release-treated by the release agent, include polyester films such as polyethylene terephthalate film; olefin resin films such as polyethylene film or polypropylene film; polyvinyl chloride film; polyimide films; polyamide films such as nylon film; and plastic base films (synthetic resin films) such as rayon film. Examples of the base further include paper bases constituted of papers such as high-quality paper, Japanese paper, kraft paper, glassine paper, synthetic paper, or topcoat paper. Of these, polyester films such as polyethylene terephthalate film are preferred.

The release agent in the base in which at least one surface has been release-treated by the release agent is not particularly limited. Examples of the release agent include silicone release agents, fluorine release agents, and long chain alkyl release agents. The release agent is used alone or in combination of two or more thereof.

The thickness of the release film is not particularly limited. The release film may have any form of a single layer and a laminate.

(Base)

The pressure-sensitive adhesive sheet of the present invention may have a base form the standpoint of strength. The pressure-sensitive adhesive sheet of the present invention may have a layer constitution of base/viscoelastic layer/thermal-expandable fine particle-containing pressure-sensitive adhesive layer.

The base is not particularly limited. Examples of the base include paper bases such as a paper; fiber bases such as cloth, non-woven fabric and net; metal bases such as metal foil and metal plate; plastic bases such as films or sheets of various resins (olefin resins, polyester resins, polyvinyl chloride resins, vinyl acetate resins, amide resins, polyimide resins, polyether ether ketone (PEEK), polyphenylene sulfide (PPS), and the like); rubber bases such as rubber sheet; foams such as foamed sheet; and their laminates (in particular, laminates of plastic bases and other bases, laminates of plastic films (or sheets) with each other, and the like).

The thickness of the base is not particularly limited, but is preferably 10 to 500 $\mu$m, more preferably 12 to 200 $\mu$m, and further preferably 15 to 100 $\mu$m. The base may have a single layer form, and may have a multilayer form. If necessary, various treatments such as back surface treatment, antistatic treatment and undercoat treatment may be applied to the substrate.

The pressure-sensitive adhesive sheet of the present invention may have other layer(s) other than the above thermal-expandable fine particle-containing pressure-sensitive adhesive layer and viscoelastic layer unless it impairs the advantageous effects of the present invention.

The pressure-sensitive adhesive sheet of the present invention may have, as the other layer, an exothermic layer, an intermediate layer, undercoat layer, or a pressure-sensitive adhesive layer other than the above thermal-expandable fine particle-containing pressure-sensitive adhesive layer.

Examples of the pressure-sensitive adhesive layer other than the above thermal-expandable fine particle-containing pressure-sensitive adhesive layer, include a thermal-expandable fine particle-non-containing pressure-sensitive adhesive layer which is a pressure-sensitive adhesive layer which does not contain thermal-expandable fine particles. The thermal-expandable fine particle-non-containing pressure-sensitive adhesive layer is formed by, for example, using the conventional pressure-sensitive adhesives (for example, acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine pressure-sensitive adhesives, and epoxy pressure-sensitive adhesives) by utilizing the conventional pressure-sensitive adhesive layer forming methods. The thickness of the thermal-expandable fine particle-non-containing pressure-sensitive adhesive layer is not particularly limited, and is appropriately selected according to use purposes and use methods of the pressure-sensitive adhesive layer.

An exothermic layer may be mentioned as the above other layer. When the pressure-sensitive adhesive layer of the present invention has an exothermic layer, at the time of peeling from an adherend, the thermal-expandable fine particles can be expanded by inducing the exothermic layer to generate heat and adhesive force to the adherend can be easily decreased.

In the case of providing the exothermic layer to the pressure-sensitive adhesive sheet of the present invention, the position of the exothermic layer in the entire pressure-sensitive adhesive sheet is not particularly limited so long as at least one surface of the pressure-sensitive adhesive sheet is a surface provided by the thermal-expandable fine particle-containing pressure-sensitive adhesive layer.

The exothermic layer is not particularly limited, but is preferably a planar exothermic body. The planar exothermic body has at least exothermic element which generates heat by passage of electric current and has a flat plate shape or a sheet shape. Examples of the exothermic element having a flat plate shape or a sheet shape include metal foils, metal plates, a sheet shaped graphite carbon, and a sheet shaped material containing carbon powder, metal powder or the like. The planar exothermic body may contain an electrical insulating sheet covering the exothermic element having a planar shape or sheet shape.

The thickness of the exothermic layer is not particularly limited, but is preferably 10 to 300 μm, and more preferably 30 to 150 μm.

In the pressure-sensitive adhesive sheet of the present invention, the planar exothermic body may be the above base.

A method of preparing the pressure-sensitive adhesive sheet of the present invention is not particularly limited, and the pressure-sensitive adhesive sheet may be prepared by the conventional known methods. For example, the pressure-sensitive adhesive sheet of the present invention can be formed by providing the thermal-expandable fine particle-containing pressure-sensitive adhesive layer on at lease one side of the viscoelastic layer. More particularly, the pressure-sensitive adhesive sheet having a laminate structure of a viscoelastic layer and a thermal-expandable fine particle-containing pressure-sensitive adhesive layer is prepared by applying the thermal-expandable fine particle-containing pressure-sensitive adhesive composition to a release film to obtain a thermal-expandable fine particle-containing pressure-sensitive adhesive composition layer, curing the thermal-expandable fine particle-containing pressure-sensitive adhesive composition layer to obtain a thermal-expandable fine particle-containing pressure-sensitive adhesive layer on the release film, and adhering the thermal-expandable fine particle-containing pressure-sensitive adhesive layer to a viscoelastic layer separately prepared.

The pressure-sensitive adhesive sheet of the present invention may be prepared by a method of obtaining a laminate of a viscoelastic composition layer (a layer obtained by applying a viscoelastic composition in a layered state) and a thermal-expandable fine particle-containing pressure-sensitive adhesive composition layer, simultaneously curing both layers, thereby obtaining a laminate structure of the viscoelastic layer and the thermal-expandable fine particle-containing pressure-sensitive adhesive composition layer, from the standpoints that preparation steps can be shortened and the preparation rate can be improved.

Application methods and applicators, used in applying the thermal-expandable fine particle-containing pressure-sensitive adhesive composition are not particularly limited, and the application method described hereinafter and the applicator described hereinafter may be used.

A method of curing the thermal-expandable fine particle-containing pressure-sensitive adhesive composition in obtaining the thermal-expandable fine particle-containing pressure-sensitive adhesive layer is not particularly limited. Photocuring using an active energy ray is preferably used from the standpoints of workability, energy saving and capability of providing a relatively thick layer. The active energy ray is not particularly limited. Examples of the active energy ray include an electron ray and an ultraviolet ray, and an ultraviolet ray is particularly preferred. Irradiation method, illuminance, light intensity, and the like of the active energy ray are not particularly limited, and are appropriately selected.

In the case that photocuring by an active energy ray is used as the method of curing the thermal-expandable fine particle-containing pressure-sensitive adhesive composition, irradiation method of an active energy ray may appropriately be selected from the standpoint of adjusting initial pressure-sensitive adhesive force of the surface of the thermal-expandable fine particle-containing adhesive layer of the pressure-sensitive adhesive sheet of the present invention. A method of adjusting initial adhesive force of a pressure-sensitive adhesive sheet, which uses photocuring by an active energy ray as the curing method of a pressure-sensitive adhesive composition, is specifically exemplified by the method described in JP 2003-13015A. JP 2003-13015A discloses a method in which irradiation of an active energy ray is conducted dividing into plural stages, thereby further precisely adjusting adhesive performance. More specifically, the method includes (i) a method in which in the case of using an ultraviolet ray as the active energy ray, irradiation of an ultraviolet ray is conducted by dividing into two stages: a first stage of conducting light irradiation with illuminance of 30 $mW/cm^2$ or more; and a second stage of conducting light irradiation with illuminance lower than that in the first stage, thereby substantially completing a polymerization reaction, and (ii) a method in which irradiation of an ultraviolet ray is conducted by dividing into three stages: a first stage of conducting light irradiation with illuminance of 30 $mW/cm^2$ or more, a second stage of conducting light irradiation with illuminance lower than that in the first stage to achieve the

conversion of at least 70% by weight, and a third stage of conducting light irradiation with illuminance of 30 $mW/cm^2$ or more, thereby substantially completing a polymerization reaction. The conversion is calculated by the same method as in the case of the conversion of the partially polymerized product.

Examples of an irradiator of ultraviolet ray used in the above first stage include a low pressure mercury lamp, a high pressure mercury lamp, an ultrahigh pressure mercury lamp, and a metal halide lamp. Examples of an irradiator used in the above second stage include a chemical lamp and a black light lamp.

Preferred preparation example of the pressure-sensitive adhesive sheet having a laminate structure of the viscoelastic layer and the thermal-expandable fine particle-containing pressure-sensitive adhesive layer is described below by reference to the drawings as necessary. The preparation method of the pressure-sensitive adhesive sheet of the present invention is not limited to this preparation example. The preferred preparation example of the pressure-sensitive adhesive sheet having a laminate structure of the viscoelastic layer and the thermal-expandable fine particle-containing pressure-sensitive adhesive layer is hereinafter sometimes referred to as "Preparation Example 1".

Figs. 1 to 3 show a first step, a second step and a third step of Preparation Example 1, respectively. Fig. 4 shows a sheet obtained by the third step of Preparation Example 1. Fig. 5 shows a pressure-sensitive adhesive sheet obtained by Preparation Example 1. In Figs. 1 to 5, "la" indicates the first step of Preparation Example 1, "1b" indicates the second step of Preparation Example 1, "1c" indicates the third step of Preparation Example 1, "1d" indicates a sheet obtained by the third step of Preparation Example 1, and "1e" indicates a pressure-sensitive adhesive sheet obtained by Preparation Example 1. Furthermore, in Figs. 1 to 5, 11 is a thermal-expandable fine particle-containing pressure-sensitive adhesive composition layer, 12 is a release film (separator), 13 is a thermal-expandable fine particle-containing pressure-sensitive adhesive layer, 14 indicates an active energy ray, 15 is a viscoelastic layer, and 16 is a pressure-sensitive adhesive sheet.

The first step of Preparation Example 1 is a step of applying the thermal-expandable fine particle-containing pressure-sensitive adhesive composition to a release-treated surface of the release film 12 to form the thermal-expandable fine particle-containing pressure-sensitive adhesive composition layer 11 (see Fig. 1). By this step, a sheet in which the thermal-expandable fine particle-containing pressure-sensitive adhesive composition layer 11 has been formed on the release-treated surface of the release film 12 is obtained.

In the first step of Preparation Example 1, an application method used in applying the thermal-expandable fine particle-containing pressure-sensitive adhesive composition to the release-treated surface of the release film 12 is not particularly limited. Examples of the application method include a slot die method, a reverse gravure coating method, a microgravure method, a dipping method, a spin coating method, a brush coating method, a roll coating method, and a flexo printing method. In applying the thermal-expandable fine particle-containing pressure-sensitive adhesive composition to the release-treated surface of the release film 12, applicators generally used are used without particular limitation. Examples of the applicator include roll coaters such as a reverse coater and a gravure coater; curtain coaters; lip coaters, die coaters; and knife coaters.

The second step of Preparation Example 1 is a step of adhering the release film 12 to the thermal-expandable fine particle-containing pressure-sensitive adhesive composition layer 11 side of the sheet obtained by the first step, in the state that the release-treated surface of the release film 12 comes into contact with the surface of the thermal-expandable fine particle-containing pressure-sensitive adhesive composition layer 11 (see Fig. 2). By this step, a sheet having release films 12 at both sides of the thermal-expandable fine particle-containing pressure-sensitive adhesive composition layer 11 (a sheet having a layer constitution of release film 12/thermal-expandable fine particle-containing pressure-sensitive adhesive composition layer 11/release film 12) is obtained.

It is preferred in the second step of Preparation Example 1 to suppress the contact of a pressure-sensitive adhesive composition with oxygen inhibiting photocuring polymerization (photopolymerization reaction) in photocuring the pressure-sensitive adhesive composition. For this reason, oxygen is blocked by attaching the release film 12.

A method of suppressing the contact of a pressure-sensitive adhesive composition with oxygen is not particularly limited in Preparation Example 1. Therefore, other than the method of blocking oxygen using a release film, a method in which irradiation of an active energy ray is conducted in environment under an atmosphere of an inert gas (for example, nitrogen gas) may be used. In other words, in the second step of Preparation Example 1, inhibition of photopolymerization reaction by oxygen may be suppressed by setting the environment, at which irradiation of an active energy ray is to be conducted, to an inert gas atmosphere with using an inert gas (for example, nitrogen gas), in place of by adhering the release film 12. In the case that the thermal-expandable fine particle-containing pressure-sensitive adhesive composition layer 11 is photocured using an active energy ray 14 in an inert gas atmosphere such as nitrogen gas, the thermal-expandable fine particle-containing pressure-sensitive adhesive composition layer 11 may not be covered with the release film 12.

In the case that a method of setting the environment at which irradiation of an active energy ray is to be conducted to an inert gas atmosphere is used as the method of preventing the contact of a pressure-sensitive adhesive composition with oxygen, oxygen is preferably not present as possible in the inert gas atmosphere, and for example, the amount of oxygen present is preferably 5,000 ppm or less in terms of oxygen concentration.

In the case that the amount of dissolved oxygen in the thermal-expandable fine particle-containing pressure-sensitive adhesive composition layer 11 is large, there may be some cases that the amount of radicals generated is suppressed, polymerization (photopolymerization) does not proceed sufficiently, and this may adversely affect the conversion, molecular weight and molecular weight distribution of the polymer obtained. For this reason, bubbling treatment by an inert gas (for example, nitrogen gas) may be conducted to the thermal-expandable fine particle-containing pressure-sensitive adhesive composition before forming the thermal-expandable fine particle-containing pressure-sensitive adhesive composition layer 11.

The third step of Preparation Example 1 is a step of irradiating the sheet obtained by the second step with the active energy ray 14 from both surface sides of the sheet (see Fig. 3). In this step, the thermal-expandable fine particle-containing pressure-sensitive adhesive composition layer 11 is irradiated with the active energy ray 14 through the release film 12. As a result, the thermal-expandable fine particle-containing pressure-sensitive adhesive composition layer 11 is photocured to form the thermal-expandable fine particle-containing pressure-sensitive adhesive layer 13. In the sheet obtained by the second step, the thermal-expandable fine particle-containing pressure-sensitive adhesive composition layer 11 is blocked by the release film 12 from oxygen becoming inhibition factor of a photocuring reaction.

Examples of the active energy ray 14 include ionizing radiations such as $\alpha$-ray, $\beta$-ray, $\gamma$-ray, neutron ray, and electron ray, and ultraviolet rays. Of those, ultraviolet rays are preferred. Irradiation energy and irradiation time of the active energy ray are not particularly limited so long as it can induce the reaction of monomer components. The preferred embodiment of irradiation of the active energy ray 14 is, for example, irradiation with ultraviolet rays having illuminance of 1 to 200 $mW/cm^2$ at a wavelength of 300 to 400 nm in light intensity of 400 to 4,000 $mJ/cm^2$.

Light source used in irradiating ultraviolet ray as the active energy ray 14 is not particularly limited so long as it has spectrum distribution in a region at a wavelength of 180 to 460 nm (preferably 300 to 400 nm). Examples of the light source include general irradiators such as a chemical lamp, a black lamp (for example, black light manufactured by Toshiba Lighting & Technology Corporation), mercury arc, carbon arc, a low pressure mercury lamp, a medium pressure mercury lamp, a high pressure mercury lamp, an ultrahigh pressure mercury lamp, and a metal halide lamp. Examples of the light source further include irradiators that can generate ionizing radiations having wavelength longer or shorter than the above-described wavelength.

Illuminance of ultraviolet rays in irradiating with ultraviolet rays as the active energy ray 14 is set to the desired illuminance by, for example, adjusting a distance of from the irradiator as the light source to the thermal-expandable fine particle-containing pressure-sensitive adhesive composition layer 11, and voltage.

In the case of curing the thermal-expandable fine particle-containing pressure-sensitive adhesive composition layer 11 in Preparation Example 1, the thermal-expandable fine particle-containing pressure-sensitive adhesive composition layer 11 is preferably cured such that the conversion reaches 90% by weight or more. Unreacted monomers may be removed by providing a drying step. The conversion is calculated in the same manner as in the case of the conversion of the above partially polymerized product.

In Fig. 4, "1d" indicates the sheet obtained by the third step. The sheet obtained by the third step is a sheet having a layer constitution of release film 12/thermal-expandable fine particle-containing pressure-sensitive adhesive layer 13/release film 12.

The fourth step of Preparation Example 1 is a step of adhering the sheet obtained by the third step, in which one release film 12 has been peeled off and the thermal-expandable fine particle-containing pressure-sensitive adhesive layer 13 has been exposed, with the viscoelastic layer 15 provided on a release film 12 in the state that the thermal-expandable fine particle-containing pressure-sensitive adhesive layer 13 comes into contact with the viscoelastic layer 15.

In Fig. 5, "1e" indicates the pressure-sensitive adhesive sheet obtained by Preparation Example 1. The pressure-sensitive adhesive sheet 16 is a pressure-sensitive adhesive sheet having a laminate structure of the thermal-expandable fine particle-containing pressure-sensitive adhesive layer 13 and the viscoelastic layer 15.

In the pressure-sensitive adhesive sheet of the present invention, 90° peel adhesive strength (90° peel adhesive strength on pressure-sensitive adhesive surface provided by thermal-expandable fine particle-containing pressure-sensitive adhesive layer; 90° peel adhesive force; to stainless steel plate (SUS304BA plate), tension rate: 50 mm/min, 23°C atmosphere) is not particularly limited. The 90° peel adhesive strength is preferably 20 N/25 mm or more (for example, 20 to 60 N/25 mm), and more preferably 26 N/25 mm or more (for example, 26 to 50 N/25 mm).

When the 90° peel adhesive strength of the pressure-sensitive adhesive sheet of the present invention is fallen in the above range, high initial adhesive force and adhesion reliability (particularly, repelling resistance) can further be exerted at the time of bonding, and peelability/dismantlability can further be exerted.

In the pressure-sensitive adhesive sheet of the present invention, "floating distance" obtained in a repelling resistance test described below is not particularly limited, but is preferably less than 3 mm, and more preferably less than 1 mm. Where the floating distance is large, when stress is applied over a long period of time, a pressure-sensitive adhesive sheet may be easy to be peeled off from an adherend, and adhesion reliability may be decreased. In general, when stress is applied over a long period of time in the state that a pressure-sensitive adhesive sheet is adhered to an adherend, phenomena of "peeling", "floating", "partial peeling", "deviation" and the like from an adherend may occur in

the pressure-sensitive adhesive sheet. The "repelling resistance" means the property that can suppress occurrence of the above phenomena.

Repelling resistance test

Surface opposite a measurement surface (surface provided by a thermal-expandable fine particle-containing pressure-sensitive adhesive layer) of a pressure-sensitive adhesive sheet is adhered to an aluminum plate to obtain a laminate of the aluminum plate and the pressure-sensitive adhesive sheet. The laminate of the aluminum plate and the pressure-sensitive adhesive sheet is used as a sample for a repelling resistance test. In adhering the surface opposite the measurement surface of the pressure-sensitive adhesive sheet to the aluminum plate, a strongly adhesive double-coated pressure-sensitive adhesive tape for fixing may be used as necessary.
The sample for a repelling resistance test is bent at the curvature of R50 facing the measurement surface side (pressure-sensitive adhesive sheet side) outward. That is, the sample is bent along the circumference of a circle having a radius of 20 mm.
The sample for a repelling resistance test after bending is adhered to an acrylic plate (trade name: ACRYLITE, manufactured by Mitsubishi Rayon Co., Ltd.) by pressure bonding so as not to form floating in the state that the measurement surface of the pressure-sensitive adhesive sheet comes into contact with the acrylic plate.
The sample for a repelling resistance test adhered to the acrylic plate is allowed to stand at room temperature (23°C) for 7 hours. Floating distance (distance floated) from the acrylic plate at both ends (both ends in a length direction) of the sample for a repelling resistance test is measured, and its average value is obtained. The average value is taken as "floating distance".
In the pressure-sensitive adhesive sheet of the present invention, it is preferred that the evaluation by the heat dismantlability test 1 described below is good. It is more preferably that the both evaluations by the heat dismantlability test 1 and the heat dismantlability test 2 described below are good. When the evaluation by the heat dismantlability test 1 is poor, there may be some cases that sufficient peelability/dismantlability cannot be exerted by heating at the time of peeling off the pressure-sensitive adhesive sheet from an adherend. When the pressure-sensitive adhesive sheet of the present invention meets the conditions that the both evaluations by the heat dismantlability test 1 and the heat dismantlability test 2 are good, even though the sheet has been stored or used at ordinary temperature (23°C) over a long period of time (for example, about 5 to 10 years), sufficient peelability/dismantlability can be exerted by heating at the time of peeling off the pressure-sensitive adhesive sheet from an adherend.

Heat dismantlability test 1

A pressure-sensitive adhesive sheet is adhered to a clean 304BA stainless steel plate (SUS304BA plate) by pressure bonding in an atmosphere of 23°C by reciprocating one time with a 2 kg roller in the state that a measurement surface (surface provided by a thermal-expandable fine particle-containing pressure-sensitive adhesive layer) of the pressure-sensitive adhesive sheet comes into contact with the stainless steel plate, and the resulting laminate is aged at 23°C for 30 minutes to obtain a sample for evaluation (structure having a laminate constitution of pressure-sensitive adhesive sheet and 304BA stainless steel plate).
The sample for evaluation is placed in a hot air dryer while maintaining the state that the pressure-sensitive adhesive sheet is adhered to the 304BA stainless steel plate, and then heat-treated at 130°C for 10 minutes.
The condition of the sample for evaluation after heat treatment is confirmed, and heat dismantlability of the pressure-sensitive adhesive sheet is evaluated by the following standards.
Good: Case that a pressure-sensitive adhesive sheet has been peeled off from a 304BA stainless steel plate, or case that a pressure-sensitive adhesive sheet can easily be peeled off from a 304BA stainless steel plate
Failure: Case that a pressure-sensitive adhesive sheet cannot easily be peeled off from a 304BA stainless steel plate

Heat dismantlability test 2

A pressure-sensitive adhesive sheet is laminated to a clean 304BA stainless steel plate (SUS304BA plate) by pressure bonding in an atmosphere of 23°C by reciprocating one time with a 2 kg roller in the state that a measurement surface (surface provided by a thermal-expandable fine particle-containing pressure-sensitive adhesive layer) of the pressure-sensitive adhesive sheet comes into contact with the stainless steel plate, and the resulting laminate is aged at 85°C for one week. After aging, the laminate is allowed to stand at 23°C for 24 hours to obtain a sample for evaluation (structure having a laminate constitution of pressure-sensitive adhesive sheet and 304BA stainless steel plate).
The sample for evaluation is placed in a hot air dryer while maintaining the state that the pressure-sensitive adhesive sheet is adhered to the 304BA stainless steel plate, and then heat-treated at 130°C for 10 minutes.
The condition of the sample for evaluation after heat treatment is confirmed, and heat dismantlability of the pressure-sensitive adhesive sheet is evaluated by the following standards.

Good: Case that a pressure-sensitive adhesive sheet has been peeled off from a 304BA stainless steel plate, or case that a pressure-sensitive adhesive sheet can easily be peeled off from a 304BA stainless steel plate

Failure: Case that a pressure-sensitive adhesive sheet cannot easily be peeled off from a 304BA stainless steel plate

The thickness of the pressure-sensitive adhesive sheet of the present invention is not particularly limited. The thickness is preferably 100 to 3,000 μm, and more preferably 150 to 2,000 μm.

The pressure-sensitive adhesive sheet of the present invention is a pressure-sensitive adhesive sheet for repeelable purpose. The pressure-sensitive adhesive sheet of the present invention is also a thermal-expandable, repeelable pressure-sensitive adhesive sheet.

The pressure-sensitive adhesive sheet of the present invention has the thermal-expandable fine particle-containing pressure-sensitive adhesive layer. Therefore, the pressure-sensitive adhesive sheet exerts the properties that high initial adhesive force and adhesion reliability (particularly, repelling resistance) can be maintained at the time of bonding to an adherend and adhesive force (adhesive strength, bonding strength) can be deceased at the time of peeling. This is because the thermal-expandable fine particle-containing pressure-sensitive adhesive layer of the pressure-sensitive adhesive sheet of the present invention is formed from the thermal-expandable fine particle-containing pressure-sensitive adhesive composition comprising the monomer mixture or its partially polymerized product, comprising (a2) that is a component to contribute to the improvement in adhesive force and cohesive force of the pressure-sensitive adhesive layer and (a3) that is a component to increase the effect of the (a2), as monomer components.

Thus, the pressure-sensitive adhesive sheet of the present invention exerts the property that the sheet exerts good adhesive force to an adherend and can easily be peeled off from the adherend by heating without substantially containing an acidic group-containing monomer (for example, a carboxyl group-containing monomer such as acrylic acid; or a monomer containing an acidic group (sulfonate group, phosphate group and the like) other than carboxyl group, such as a sulfonate group-containing monomer or phosphate group-containing monomer), as the copolymerizable monomer (a1) in the thermal-expandable fine particle-containing pressure-sensitive adhesive composition used to form the thermal-expandable fine particle-containing pressure-sensitive adhesive layer. The term "without substantially containing" means that the acidic group-containing monomer is not contained at all in the monomer mixture of the thermal-expandable fine particle-containing composition, or even when it is contained, its content is 0.1 part by weight or less per 100 parts by weight of the total amount of the monomer components. The pressure-sensitive adhesive sheet of the present invention has the thermal-expandable fine particle-containing pressure-sensitive adhesive layer. Therefore, increase in adhesive force to an adherend (particularly, metal adherend) with the passage of time is difficult to occur, and additionally, corrosion to an adherend (particularly, metal adherend) is difficult to occur. This is because the thermal-expandable fine particle-containing pressure-sensitive adhesive layer of the pressure-sensitive adhesive sheet of the present invention is formed from the thermal-expandable fine particle-containing pressure-sensitive adhesive composition comprising the monomer mixture or its partially polymerized product comprising the monomer (a2) having at least one nitrogen atom and one ethylenically unsaturated bond in its molecule, as the monomer component. The term "metal adherend" used herein means an adherend having a metal as a material.

The pressure-sensitive adhesive sheet of the present invention has the thermal-expandable fine particle-containing pressure-sensitive adhesive layer in which increase in adhesive force with the passage of time is further difficult to occur since the monomer mixture or its partially polymerized product contained in the thermal-expandable fine particle-containing pressure-sensitive adhesive composition contains (a3) in addition to (a2).

Thus, the pressure-sensitive adhesive layer of the present invention has high initial adhesive force even to a metal adherend, and further has the property that the adhesive force is easily decreased by expansion of the thermal-expandable fine particles by heating at the time of peeling.

The pressure-sensitive adhesive sheet of the present invention has the thermal-expandable fine particle-containing pressure-sensitive adhesive layer. Therefore, when the pressure-sensitive adhesive sheet is heated after adhered to an adherend, the contact area between the pressure-sensitive adhesive sheet and the adherend is decreased, thereby exerting: (i) properties (peelability, easy peelability) that adhesive force is easily decreased; and (ii) dismantlability (separability) of a bonded part. In the present application, the properties (i) and (ii) may sometimes be called "peelability/dismantlability" as a whole. The reason that the contact area between the pressure-sensitive adhesive sheet and the adherend is decreased when the pressure-sensitive adhesive sheet is heated after adhered to the adherend is that the thermal-expandable fine particles swell and/or expand by heat, and due to this, the thermal-expandable fine particle-containing pressure-sensitive adhesive layer is expansion-deformed, and the surface of the thermal-expandable fine particle-containing pressure-sensitive adhesive layer deforms into a concavo-convex shape.

The pressure-sensitive adhesive sheet of the present invention has the thermal-expandable fine particle-containing pressure-sensitive adhesive layer, and therefore has the property (easy peelability) that adhesive force is easily decreased by expansion of the thermal-expandable fine particles by heating.

In particular, the pressure-sensitive adhesive sheet of the present invention has both the viscoelastic layer and the thermal-expandable fine particle-containing pressure-sensitive adhesive layer. Therefore, the pressure-sensitive

adhesive sheet exerts high initial adhesive force and adhesion reliability (particularly, repelling resistance) in high level at the time of bonding to an adherend, and exerts peelability/dismantlability in high level at the time of peeling from the adherend. In other words, the pressure-sensitive adhesive sheet of the present invention has the viscoelastic layer in addition to the thermal-expandable fine particle-containing pressure-sensitive adhesive layer, and therefore exerts better adhesion properties as compared with the case of having only the thermal-expandable fine particle-containing pressure-sensitive adhesive layer.

In particular, when the pressure-sensitive adhesive sheet of the present invention has a bubble-mixed viscoelastic layer or a fine particle-containing viscoelastic layer, particularly, a bubble-mixed, fine particle-containing viscoelastic layer, as the viscoelastic layer, both of: initial adhesive force and adhesion reliability (particularly, repelling resistance) to an adherend at the time of bonding; and peelability/dismantlability from the adherend at the time peeling can be achieved in higher level. The reason is that when the viscoelastic layer contains bubbles, flexibility and stress relaxation property of the viscoelastic layer are improved. Furthermore, when the viscoelastic layer contains fine particles, adhesive force of the viscoelastic layer is improved, and breakage of the pressure-sensitive adhesive sheet due to peeling between the viscoelastic layer and the thermal-expandable fine particle-containing pressure-sensitive adhesive layer is further effectively prevented at the time of adhering the pressure-sensitive adhesive sheet to an adherend and at the time of peeling the pressure-sensitive adhesive sheet from the adherend.

The pressure-sensitive adhesive sheet of the present invention maintains high initial adhesive force and adhesion reliability (particularly, repelling resistance) to adherends of various materials at the time of bonding, and exerts good peelability/dismantlability to the adherends by heating at the time of peeling. In particular, the pressure-sensitive adhesive sheet of the present invention maintains high initial adhesive force and adhesion reliability (particularly, repelling resistance) even to a metal adherend at the time of bonding and exerts good peelability/dismantlability by heating at the time of peeling.

The heat treatment at the time of peeling off the pressure-sensitive adhesive sheet of the present invention from the adherend is not particularly limited, and can be conducted utilizing appropriate heating means. Examples of the heat treatment include heat treatments using a hot plate, a hot air dryer, an infrared lamp, a near-infrared lamp, an air dryer, hot water and the like. The temperature of the heat treatment is not particularly limited so long as the temperature is higher than an expansion initiation temperature of the thermal-expandable fine particles. The temperature is appropriately set according to surface state of an adherend, the kind of the thermal-expandable fine particles, heat resistance of an adherend, and heating method (heat capacity, heating means). More specific examples of the heat treatment include a heat treatment of heating at a temperature of 100 to 250°C for 5 to 90 seconds by a hot plate, and a heat treatment of heating at a temperature of 100 to 250°C for 5 to 15 minutes by a hot air dryer.

The adherend to which the pressure-sensitive adhesive sheet of the present invention is adhered is not particularly limited. Examples of the adherend include plastic adherends, metal adherends, fiber adherends, paper adherends, inorganic material adherends and composite material adherends (adherends constituted of at least two materials of various materials such as plastics (resins), metals, fibers, papers and inorganic materials). Of those, the preferred adherends are plastic adherends, metal adherends, and composite material adherends constituted of plastics (reins) and metals.

Resins constituting the plastic adherends are not particularly limited. Examples of the resin include polycarbonate, polypropylene, polyester, polystyrene, phenolic resin, epoxy resin, polyurethane, ABS, acrylic resin, and mixed resins of those. Metals constituting the metal adherends are not particularly limited. Examples of the metal include iron, aluminum, copper, nickel, chromium, manganese, magnesium, zinc, tin, titanium, and their alloys (for example, stainless steel).

The surface shape of the adherend to which the pressure-sensitive adhesive sheet of the present invention is adhered is not particularly limited. Examples of the surface shape include a flat and smooth shape, a curved shape and a shape of a combination of a flat surface and a curved surface. Concavo-convex and difference in level may be present on the surface of the adherend.

The pressure-sensitive adhesive sheet of the present invention has excellent adhesion reliability, and is therefore preferably used in bonding uses such as bonding use of members with each other and bonding use between a cabinet and a member. The pressure-sensitive adhesive sheet is particularly effective in the case that the member and cabinet have a curved surface, a concavo-convex surface, difference in level, and the like. Furthermore, the pressure-sensitive adhesive sheet of the present invention has excellent peelability/dismantlability, and is therefore preferably used in uses requiring rework and recycle. That is, the pressure-sensitive adhesive sheet of the present invention maintains high initial adhesive force and adhesion reliability (particularly, repelling resistance) at the time of bonding, and after use, decreases adhesive force of the pressure-sensitive adhesive sheet by heating in dismantling a structure of an adherend and the pressure-sensitive adhesive sheet for the purpose of recycle, rework and the like, thereby the pressure-sensitive adhesive sheet and the adherend can easily be separated, making it possible to dismantle the structure of the adherend and the pressure-sensitive adhesive sheet.

The pressure-sensitive adhesive sheet of the present invention is preferably used in bonding uses in various

fields such as automobiles, machine parts, electric appliances, and building materials (for example, use for bonding a part and a part, or use for fixing a part to a cabinet). The pressure-sensitive adhesive sheet of the present invention is further used in the use of fixing a member semi-permanently.

EXAMPLES

The present invention is described below in more detail by reference to Examples, but the invention is not construed as being limited thereto.

(Preparation of Thermal-Expandable Fine Particle-Containing Pressure-Sensitive Adhesive Composition A)

In a four-necked flask, there were introduced 100 parts by weight of a monomer mixture consisting of 70 parts by weight of 2-ethylhexyl acrylate, 20 parts by weight of N-vinylpyrrolidone and 10 parts by weight of isobornyl acrylate; 0.05 part by weight of (1-hydroxy-cyclohexyl)penylketone (trade name: IRGACURE 184, manufactured by BASF Japan) as a photopolymerization initiator; and 0.05 part by weight of 2,2-dimethoxy-1,2-diphenylethan-1-one (trade name: IRGACURE 651, manufactured by BASF Japan) as a photopolymerization initiator, and the resulting mixture was photopolymerized by irradiating with ultraviolet rays in nitrogen atmosphere until viscosity (BH Viscometer No. 5 rotor, 10 rpm, temperature: 30°C) reaches about 1.5 Pa·s, thereby obtaining a partially polymerized monomer syrup (partially polymerized product of monomer mixture). The conversion of the partially polymerized monomer syrup was 8.5% by weight.
To 100 parts by weight of the partially polymerized monomer syrup, there were added 30 parts by weight of thermal-expandable fine particles (expanding agent, trade name: EXPANCEL 051DU40, manufactured by Expancel), and 0.04 part by weight of 1,6-hexanediol diacrylate (HDDA) as a polyfunctional (meth)acrylate , followed by uniformly mixing, thereby obtaining thermal-expandable fine particle-containing pressure-sensitive adhesive composition A.

(Preparation of Thermal-Expandable Fine Particle-Containing Pressure-Sensitive Adhesive Compositions B to G)

Thermal-expandable fine particle-containing pressure-sensitive adhesive compositions B to G were prepared in the same manner as the preparation of the thermal-expandable fine particle-containing pressure-sensitive adhesive composition A.
In a four-necked flask, there were introduced 100 parts by weight of a monomer mixture consisting of monomer components in amounts shown in Table 3; (1-hydroxy-cyclohexyl)penylketone (trade name: IRGACURE 184, manufactured by BASF Japan) in an amount shown in Table 3 as a photopolymerization initiator; and 2,2-dimethoxy-1,2-diphenylethan-1-one (trade name: IRGACURE 651, manufactured by BASF Japan) in an amount shown in Table 3 as a photopolymerization initiator, and the resulting mixture was photopolymerized by irradiating with ultraviolet rays in nitrogen atmosphere until viscosity (BH Viscometer No. 5 rotor, 10 rpm, temperature: 30°C) reaches about 1.5 Pa.s, thereby obtaining a partially polymerized monomer syrup (partially polymerized product of monomer mixture) used in each thermal-expandable fine particle-containing pressure-sensitive adhesive composition. The conversion of the partially polymerized monomer syrup used in each thermal-expandable fine particle-containing pressure-sensitive adhesive composition is shown in Table 3.
To each 100 parts by weight of the partially polymerized monomer syrup, there were added thermal-expandable fine particles (expanding agent, trade name: EXPANCEL 05 1DU40, manufactured by Expancel) in an amount shown in Table 3, and 1,6-hexanediol diacrylate (HDDA) in an amount shown in Table 3 as a polyfunctional (meth)acrylate, followed by uniformly mixing, thereby obtaining the respective thermal-expandable fine particle-containing pressure-sensitive adhesive compositions.

TABLE 3

| | | Thermal-expandable fine particle-containing pressure-sensitive adhesive composition | | | | | | |
|---|---|---|---|---|---|---|---|---|
| | | A | B | C | D | E | F | G |
| Monomer component (parts by weight) | 2-Ethylhexyl acrylate | 70 | - | - | 70 | 90 | - | 90 |
| | Lauryl acrylate | - | 70 | - | - | - | 80 | - |
| | Butyl acrylate | - | - | 60 | - | - | - | - |
| | N-vinylpyrrolidone | 20 | 20 | 20 | - | - | - | - |
| | N-vinylcaprolactam | - | - | - | 20 | - | 20 | - |
| | Acrylic acid | - | - | - | - | 10 | - | - |
| | Isobornyl acrylate | 10 | 10 | 20 | 10 | - | - | 10 |
| Photopolymerization in itiator (parts by weight) | IRGACURE 184 | 0.05 | 0.05 | 0.05 | 0.05 | 0.05 | 0.05 | 0.05 |
| | IRGACURE 651 | 0.05 | 0.05 | 0.05 | 0.05 | 0.05 | 0.05 | 0.05 |
| Thermal-expandable fine particle (parts by weight) | EXPANCEL 051DU40 | 30 | 30 | 30 | 30 | 30 | 30 | 30 |
| Polyfunctional (meth) acrylate (parts by weight) | 1,6-Hexanediol diacrylate | 0.040 | 0.001 | 0.038 | 0.042 | 0.100 | 0.010 | 0.100 |
| Conversion of partially polymerized monomer syrup (% by weight) | | 8.5 | 10.1 | 9.3 | 8.5 | 6.9 | 4.6 | 10.6 |

(Preparation of Thermal-Expandable Fine Particle-Containing Pressure-Sensitive Adhesive Compositions H to M)

Thermal-expandable fine particle-containing pressure-sensitive adhesive compositions H to M were prepared in the same manner as the preparation of the thermal-expandable fine particle-containing pressure-sensitive adhesive composition A.

In a four-necked flask, there were introduced 100 parts by weight of a monomer mixture consisting of monomer components in amounts shown in Table 4; (1-hydroxy-cyclohexyl)penylketone (trade name: IRGACURE 184, manufactured by BASF Japan) in an amount shown in Table 4 as a photopolymerization initiator; and 2,2-dimethoxy-1,2-diphenylethan-1-one (trade name: IRGACURE 651, manufactured by BASF Japan) in an amount shown in Table 4 as a photopolymerization initiator, and the resulting mixture was photopolymerized by irradiating with ultraviolet rays in nitrogen atmosphere until viscosity (BH Viscometer No. 5 rotor, 10 rpm, temperature: 30°C) reaches about 1.5 Pa·s, thereby obtaining a partially polymerized monomer syrup (partially polymerized product of monomer mixture) used in each thermal-expandable fine particle-containing pressure-sensitive adhesive composition. The conversion of the partially polymerized monomer syrup used in each thermal-expandable fine particle-containing pressure-sensitive adhesive composition is shown in Table 4.

To each 100 parts by weight of the partially polymerized monomer syrup, there were added thermal-expandable fine particles (expanding agent, trade name: EXPANCEL 051DU40, manufactured by Expancel) in an amount shown in Table 4, and 1,6-hexanediol diacrylate (HDDA) in an amount shown in Table 4 as a polyfunctional (meth)acrylate , followed by uniformly mixing, thereby obtaining the respective thermal-expandable fine particle-containing pressure-sensitive adhesive compositions.

TABLE 4

| | | Thermal-expandable fine particle-containing pressure-sensitive adhesive composition | | | | | |
|---|---|---|---|---|---|---|---|
| | | H | I | J | K | L | M |
| Monomer component (parts by weight) | 2-Ethylhexyl acrylate | 70 | 70 | 70 | 60 | 60 | 60 |
| | N-vinylpyrrolidone | 10 | 20 | 20 | - | - | - |
| | N-vinylcaprolactam | - | - | - | 30 | - | - |
| | Dimethyl acrylamide | - | - | - | - | 30 | 20 |
| | Isobornyl acrylate | 20 | - | - | 10 | 10 | 20 |
| | Cyclohexyl acrylate | - | 10 | - | - | - | - |
| | t-Butyl acrylate | - | - | 10 | - | - | - |
| Photopolymerization initiator (parts by weight) | IRGACURE 184 | 0.05 | 0.05 | 0.05 | 0.05 | 0.05 | 0.05 |
| | IRGACURE 651 | 0.05 | 0.05 | 0.05 | 0.05 | 0.05 | 0.05 |
| Thermal-expandable fine particle (parts by weight) | EXPANCEL 051DU40 | 30 | 30 | 30 | 30 | 30 | 30 |
| Polyfunctional (meth) acrylate (parts by weight) | 1,6-Hexanediol diacrylate | 0.040 | 0.035 | 0.025 | 0.076 | 0.078 | 0.078 |
| Conversion of partially polymerized monomer syrup (% by weight) | | 12.3 | 11.2 | 11.2 | 11.5 | 10.3 | 12.0 |

(Preparation of Thermal-Expandable Fine Particle-Containing Pressure-Sensitive Adhesive Compositions N to R)

Thermal-expandable fine particle-containing pressure-sensitive adhesive compositions N to R were prepared in the same manner as the preparation of the thermal-expandable fine particle-containing pressure-sensitive adhesive composition A.

In a four-necked flask, there were introduced 100 parts by weight of a monomer mixture consisting of monomer components in amounts shown in Table 5; (1-hydroxy-cyclohexyl)penylketone (trade name: IRGACURE 184, manufactured by BASF Japan) in an amount shown in Table 5 as a photopolymerization initiator; and 2,2-dimethoxy-1,2-diphenylethan-1-one (trade name: IRGACURE 651, manufactured by BASF Japan) in an amount shown in Table 5 as a photopolymerization initiator, and the resulting mixture was photopolymerized by irradiating with ultraviolet rays in nitrogen atmosphere until viscosity (BH Viscometer No. 5 rotor, 10 rpm, temperature: 30°C) reaches about 15 Pa·s, thereby obtaining a partially polymerized monomer syrup (partially polymerized product of monomer mixture) used in each thermal-expandable fine particle-containing pressure-sensitive adhesive composition. The conversion of the partially polymerized monomer syrup used in each thermal-expandable fine particle-containing pressure-sensitive adhesive composition is shown in Table 5.

To each 100 parts by weight of the partially polymerized monomer syrup, there were added Thermal-expandable fine particles (expanding agent, trade name: EXPANCEL 051DU40, manufactured by Expancel) in an amount shown in Table 5, and 1,6-hexanediol diacrylate (HDDA) in an amount shown in Table 5 as a polyfunctional (meth)acrylate, followed by uniformly mixing, thereby obtaining the respective thermal-expandable fine particle-containing pressure-sensitive adhesive compositions.

TABLE 5

| | | Thermal-expandable fine particle-containing pressure-sensitive adhesive composition | | | | |
|---|---|---|---|---|---|---|
| | | N | O | P | Q | R |
| Monomer component (parts by weight) | 2-Ethylhexyl acrylate | 70 | 70 | 70 | 70 | 70 |
| | N-vinylcaprolactam | 20 | 20 | 20 | 20 | 20 |
| | Cyclohexyl acylate | 10 | - | - | - | - |
| | t-Butyl acrylate | - | 10 | - | - | - |
| | 1,4-cyclohexane-dimethanol monoacrylate | - | - | 10 | - | - |
| | Dicyclopentenyl-oxyethyl acrylate | - | - | - | 10 | - |
| | Dicyclopentanyl acrylate | - | - | - | - | 10 |
| Photopolymerization initiator (parts by weight) | IRGACURE 184 | 0.05 | 0.05 | 0.05 | 0.05 | 0.05 |
| | IRGACURE 651 | 0.05 | 0.05 | 0.05 | 0.05 | 0.05 |
| Thermal-expandable fine particle (parts by weight) | EXPANCEL 051DU40 | 30 | 30 | 30 | 30 | 30 |
| Polyfunctional (meth) acrylate (parts by weight) | 1,6-Hexanediol diacrylate | 0.035 | 0.035 | 0.010 | 0.020 | 0.010 |
| Conversion of partially polymerized monomer syrup (% by weight) | | 6.5 | 6.9 | 5.9 | 18.0 | 5.1 |

(Preparation of Thermal-Expandable Fine Particle-Containing Pressure-Sensitive Adhesive Composition S)

Thermal-expandable fine particle-containing pressure-sensitive adhesive composition S was obtained in the same manner as in the thermal-expandable fine particle-containing pressure-sensitive adhesive composition D, except that the amount of 1,6-hexanediol diacrylate as a polyfunctional (meth)acrylate was changed to 0.035 part by weight.

(Usage Example 1 of Release Film)

A polyester film (trade name: MRN-38, manufactured by Mitsubishi Plastics, Inc.), one surface of which had been release-treated with a silicone-based release treating agent, was used as a release film. This release film is called "Release Film A".

(Usage Example 2 of Release Film)

A polyester film (trade name: MRF-38, manufactured by Mitsubishi Plastics, Inc.), one surface of which had been release-treated with a silicone-based release treating agent, was used as a release film. This release film is called "Release Film B".

(Preparation Example 1 of Viscoelastic Layer)

In a four-necked flask, there were introduced 90 parts by weight of 2-ethylhexyl acrylate; 10 parts by weight of acrylic acid; 0.05 part by weight of (1-hydroxy-cyclohexyl)phenylketone (trade name: IRGACURE 184, manufactured by BASF Japan) as a photopolymerization initiator; and 0.05 part by weight of 2,2-dimethoxy-1,2-diphenylethan-1-one

(trade name: IRGACURE 651, manufactured by BASF Japan) as a photopolymerization initiator, and the resulting mixture was photopolymerized by exposing to ultraviolet rays in nitrogen atmosphere until viscosity (BH Viscometer No. 5 rotor, 10 rpm, temperature: 30°C) reaches about 1.5 Pa·s, thereby obtaining a partially polymerized monomer syrup (partially polymerized product of monomer mixture) having a conversion of about 7%. To 100 parts by weight of the partially polymerized monomer syrup, 0.1 part by weight of 1,6-hexanediol diacrylate was added. Further, fine particles (hollow glass beads, trade name: FUJI BALLOON H-40, average particle size: 40 μm, manufactured by Fuji Silysia Chemical Ltd.) were added to the syrup in a proportion of 30% by volume based on the total volume of the syrup. Subsequently, 1 part by weight of a fluorine-based surfactant (trade name: SURFLON S-393, manufactured by AGC Seimi Chemical Co., Ltd.) was added to the syrup, followed by uniformly mixing with a propeller mixer, thereby obtaining a polymerizable composition containing fine particles (fine particle-containing polymerizable composition).
The fine particle-containing polymerizable composition was placed in a beaker, and nitrogen gas was bubbled from the bottom of the beaker. The bubbles generated were uniformly introduced in the fine particle-containing polymerizable composition by a homomixer, thereby obtaining a polymerizable composition containing bubbles and fine particles (bubble-mixed, fine particle-containing polymerizable composition). The bubbles were introduced such that the amount thereof is about 15% by volume based on the total volume (100% by volume) of the polymerizable composition containing bubbles and fine particles.
The bubble-mixed, fine particle-containing polymerizable composition was applied to a release-treated surface of the release film B in a thickness of 800 μm to form a coating layer. The coating layer was covered with a release-treated surface of the release film A, thereby obtaining a sheet having the bubble-mixed, fine particle-containing polymerizable composition layer between two release films (bubble-mixed, fine particle-containing polymerizable composition layer sheet). The bubble-mixed, fine particle-containing polymerizable composition layer sheet was irradiated with ultraviolet rays under the conditions of illuminance: 4 $mW/cm^2$ and light intensity: 1,200 $mJ/cm^2$ to photocure the bubble-mixed, fine particle-containing polymerizable composition layer sheet, thereby obtaining a sheet having a bubble-mixed, fine particle-containing viscoelastic layer between two release films (viscoelastic layer sheet A, a sheet having a laminate constitution of release film A/bubble-mixed, fine particle-containing viscoelastic layer/release film B).
Solvent-insoluble content in the bubble-mixed, fine particle-containing viscoelastic layer of the viscoelastic layer sheet A was 85% by weight.

(Preparation Example 2 of Viscoelastic Layer)

A partially polymerized monomer syrup having a conversion of 7% (partially polymerized product of monomer mixture) was obtained in the same manner as in Preparation Example 1 of Viscoelastic Layer above.
The partially polymerized monomer syrup was applied to a release-treated surface of the release film B in a thickness of 800 μm to form a polymerizable composition layer. The polymerizable composition layer was covered with a release-treated surface of the release film A, thereby obtaining a sheet having the polymerizable composition layer between two release films. The sheet having the polymerizable composition layer was irradiated with ultraviolet rays under the conditions of illuminance: 4 $mW/cm^2$ and light intensity: 1,200 $mJ/cm^2$ to photocure the polymerizable composition layer, thereby obtaining a sheet having a viscoelastic layer between two release films (viscoelastic layer sheet B, a sheet having a laminate constitution of release film A/ viscoelastic layer/release film B).
The viscoelastic layer sheet B is the same as the viscoelastic layer sheet A, except that the viscoelastic layer sheet B does not contain fine particles, a fluorine-based surfactant or bubbles.

(Example 1)

The thermal-expandable fine particle-containing pressure-sensitive adhesive composition A was applied to a release-treated surface of the release film B in a dry thickness of 100 μm to form a thermal-expandable fine particle-containing pressure-sensitive adhesive composition layer. The thermal-expandable fine particle-containing pressure-sensitive adhesive composition layer was covered with a release-treated surface of the release film A, thereby obtaining a sheet having the thermal-expandable fine particle-containing pressure-sensitive adhesive composition layer between two release films (thermal-expandable fine particle-containing pressure-sensitive adhesive composition layer sheet). The thermal-expandable fine particle-containing pressure-sensitive adhesive composition layer sheet was irradiated with ultraviolet rays under the conditions of illuminance: 4 $mW/cm^2$ and light intensity: 1,200 $mJ/cm^2$ to photocure the thermal-expandable fine particle-containing pressure-sensitive adhesive composition layer sheet, thereby obtaining a sheet having the thermal-expandable fine particle-containing pressure-sensitive adhesive layer between two release films (thermal-expandable fine particle-containing pressure-sensitive adhesive layer sheet A, a sheet having a laminate constitution of release film A/thermal-expandable fine particle-containing pressure-sensitive adhesive layer/release film B). Solvent-insoluble content in the thermal-expandable fine particle-containing pressure-sensitive adhesive layer of the viscoelastic layer sheet A was 74% by weight.

The thermal-expandable fine particle-containing pressure-sensitive adhesive layer sheet A in which the release film A had been peeled off to expose the thermal-expandable fine particle-containing pressure-sensitive adhesive layer and the viscoelastic layer sheet A in which the release film B had been peeled off to expose the bubble-mixed, fine particle-containing viscoelastic layer were attached to each other in the state that the bubble-mixed, fine particle-containing viscoelastic layer comes into contact with the thermal-expandable fine particle-containing pressure-sensitive adhesive layer. Thus, a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B) was obtained.

(Example 2)

A sheet having the thermal-expandable fine particle-containing pressure-sensitive adhesive layer between two release films (thermal-expandable fine particle-containing pressure-sensitive adhesive layer sheet B) was prepared in the same manner as in Example 1, except that the thermal-expandable fine particle-containing pressure-sensitive adhesive composition B was used in place of the thermal-expandable fine particle-containing pressure-sensitive adhesive composition A. Solvent-insoluble content in the thermal-expandable fine particle-containing pressure-sensitive adhesive layer was 65% by weight.
The thermal-expandable fine particle-containing pressure-sensitive adhesive layer sheet B was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 3)

A sheet having the thermal-expandable fine particle-containing pressure-sensitive adhesive layer between two release films (thermal-expandable fine particle-containing pressure-sensitive adhesive layer sheet C) was prepared in the same manner as in Example 1, except that the thermal-expandable fine particle-containing pressure-sensitive adhesive composition C was used in place of the thermal-expandable fine particle-containing pressure-sensitive adhesive composition A. Solvent-insoluble content in the thermal-expandable fine particle-containing pressure-sensitive adhesive layer was 66% by weight.
The thermal-expandable fine particle-containing pressure-sensitive adhesive layer sheet C was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 4)

A sheet having the thermal-expandable fine particle-containing pressure-sensitive adhesive layer between two release films (thermal-expandable fine particle-containing pressure-sensitive adhesive layer sheet D) was prepared in the same manner as in Example 1, except that the thermal-expandable fine particle-containing pressure-sensitive adhesive composition D was used in place of the thermal-expandable fine particle-containing pressure-sensitive adhesive composition A. Solvent-insoluble content in the thermal-expandable fine particle-containing pressure-sensitive adhesive layer was 77% by weight.
The thermal-expandable fine particle-containing pressure-sensitive adhesive layer sheet D was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 5)

A sheet having the thermal-expandable fine particle-containing pressure-sensitive adhesive layer between two

release films (thermal-expandable fine particle-containing pressure-sensitive adhesive layer sheet E) was prepared in the same manner as in Example 1, except that the thermal-expandable fine particle-containing pressure-sensitive adhesive composition H was used in place of the thermal-expandable fine particle-containing pressure-sensitive adhesive composition A. Solvent-insoluble content in the thermal-expandable fine particle-containing pressure-sensitive adhesive layer was 76% by weight.
The thermal-expandable fine particle-containing pressure-sensitive adhesive layer sheet E was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 6)

A sheet having the thermal-expandable fine particle-containing pressure-sensitive adhesive layer between two release films (thermal-expandable fine particle-containing pressure-sensitive adhesive layer sheet F) was prepared in the same manner as in Example 1, except that the thermal-expandable fine particle-containing pressure-sensitive adhesive composition I was used in place of the thermal-expandable fine particle-containing pressure-sensitive adhesive composition A. Solvent-insoluble content in the thermal-expandable fine particle-containing pressure-sensitive adhesive layer was 79% by weight.
The thermal-expandable fine particle-containing pressure-sensitive adhesive layer sheet F was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 7)

A sheet having the thermal-expandable fine particle-containing pressure-sensitive adhesive layer between two release films (thermal-expandable fine particle-containing pressure-sensitive adhesive layer sheet G) was prepared in the same manner as in Example 1, except that the thermal-expandable fine particle-containing pressure-sensitive adhesive composition J was used in place of the thermal-expandable fine particle-containing pressure-sensitive adhesive composition A. Solvent-insoluble content in the thermal-expandable fine particle-containing pressure-sensitive adhesive layer was 75% by weight.
The thermal-expandable fine particle-containing pressure-sensitive adhesive layer sheet G was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 8)

A sheet having the thermal-expandable fine particle-containing pressure-sensitive adhesive layer between two release films (thermal-expandable fine particle-containing pressure-sensitive adhesive layer sheet H) was prepared in the same manner as in Example 1, except that the thermal-expandable fine particle-containing pressure-sensitive adhesive composition K was used in place of the thermal-expandable fine particle-containing pressure-sensitive adhesive composition A. Solvent-insoluble content in the thermal-expandable fine particle-containing pressure-sensitive adhesive layer was 77% by weight.
The thermal-expandable fine particle-containing pressure-sensitive adhesive layer sheet H was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 9)

A sheet having the thermal-expandable fine particle-containing pressure-sensitive adhesive layer between two release films (thermal-expandable fine particle-containing pressure-sensitive adhesive layer sheet I) was prepared in the same manner as in Example 1, except that the thermal-expandable fine particle-containing pressure-sensitive adhesive composition L was used in place of the thermal-expandable fine particle-containing pressure-sensitive adhesive composition A. Solvent-insoluble content in the thermal-expandable fine particle-containing pressure-sensitive adhesive layer was 81% by weight.
The thermal-expandable fine particle-containing pressure-sensitive adhesive layer sheet I was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 10)

A sheet having the thermal-expandable fine particle-containing pressure-sensitive adhesive layer between two release films (thermal-expandable fine particle-containing pressure-sensitive adhesive layer sheet J) was prepared in the same manner as in Example 1, except that the thermal-expandable fine particle-containing pressure-sensitive adhesive composition M was used in place of the thermal-expandable fine particle-containing pressure-sensitive adhesive composition A. Solvent-insoluble content in the thermal-expandable fine particle-containing pressure-sensitive adhesive layer was 84% by weight.
The thermal-expandable fine particle-containing pressure-sensitive adhesive layer sheet J was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 11)

A sheet having the thermal-expandable fine particle-containing pressure-sensitive adhesive layer between two release films (thermal-expandable fine particle-containing pressure-sensitive adhesive layer sheet K) was prepared in the same manner as in Example 1, except that the thermal-expandable fine particle-containing pressure-sensitive adhesive composition N was used in place of the thermal-expandable fine particle-containing pressure-sensitive adhesive composition A. Solvent-insoluble content in the thermal-expandable fine particle-containing pressure-sensitive adhesive layer was 76% by weight.
The thermal-expandable fine particle-containing pressure-sensitive adhesive layer sheet K was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 12)

A sheet having the thermal-expandable fine particle-containing pressure-sensitive adhesive layer between two release films (thermal-expandable fine particle-containing pressure-sensitive adhesive layer sheet L) was prepared in the same manner as in Example 1, except that the thermal-expandable fine particle-containing pressure-sensitive adhesive composition O was used in place of the thermal-expandable fine particle-containing pressure-sensitive adhesive composition A. Solvent-insoluble content in the thermal-expandable fine particle-containing pressure-sensitive adhesive layer was 78% by weight.
The thermal-expandable fine particle-containing pressure-sensitive adhesive layer sheet L was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film

B).

(Example 13)

A sheet having the thermal-expandable fine particle-containing pressure-sensitive adhesive layer between two release films (thermal-expandable fine particle-containing pressure-sensitive adhesive layer sheet M) was prepared in the same manner as in Example 1, except that the thermal-expandable fine particle-containing pressure-sensitive adhesive composition P was used in place of the thermal-expandable fine particle-containing pressure-sensitive adhesive composition A. Solvent-insoluble content in the thermal-expandable fine particle-containing pressure-sensitive adhesive layer was 93% by weight.
The thermal-expandable fine particle-containing pressure-sensitive adhesive layer sheet M was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 14)

A sheet having the thermal-expandable fine particle-containing pressure-sensitive adhesive layer between two release films (thermal-expandable fine particle-containing pressure-sensitive adhesive layer sheet O) was prepared in the same manner as in Example 1, except that the thermal-expandable fine particle-containing pressure-sensitive adhesive composition Q was used in place of the thermal-expandable fine particle-containing pressure-sensitive adhesive composition A. Solvent-insoluble content in the thermal-expandable fine particle-containing pressure-sensitive adhesive layer was 95% by weight.
The thermal-expandable fine particle-containing pressure-sensitive adhesive layer sheet O was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Example 15)

A sheet having the thermal-expandable fine particle-containing pressure-sensitive adhesive layer between two release films (thermal-expandable fine particle-containing pressure-sensitive adhesive layer sheet P) was prepared in the same manner as in Example 1, except that the thermal-expandable fine particle-containing pressure-sensitive adhesive composition R was used in place of the thermal-expandable fine particle-containing pressure-sensitive adhesive composition A. Solvent-insoluble content in the thermal-expandable fine particle-containing pressure-sensitive adhesive layer was 93% by weight.
The thermal-expandable fine particle-containing pressure-sensitive adhesive layer sheet P was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Comparative Example 1)

A sheet having the thermal-expandable fine particle-containing pressure-sensitive adhesive layer between two release films (thermal-expandable fine particle-containing pressure-sensitive adhesive layer sheet Q) was prepared in the same manner as in Example 1, except that the thermal-expandable fine particle-containing pressure-sensitive adhesive composition E was used in place of the thermal-expandable fine particle-containing pressure-sensitive adhesive composition A. Solvent-insoluble content in the thermal-expandable fine particle-containing pressure-sensitive adhesive layer was 86% by weight.
The thermal-expandable fine particle-containing pressure-sensitive adhesive layer sheet Q was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine

particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Comparative Example 2)

A sheet having the thermal-expandable fine particle-containing pressure-sensitive adhesive layer between two release films (thermal-expandable fine particle-containing pressure-sensitive adhesive layer sheet R) was prepared in the same manner as in Example 1, except that the thermal-expandable fine particle-containing pressure-sensitive adhesive composition F was used in place of the thermal-expandable fine particle-containing pressure-sensitive adhesive composition A. Solvent-insoluble content in the thermal-expandable fine particle-containing pressure-sensitive adhesive layer was 63% by weight.
The thermal-expandable fine particle-containing pressure-sensitive adhesive layer sheet R was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Comparative Example 3)

A sheet having the thermal-expandable fine particle-containing pressure-sensitive adhesive layer between two release films (thermal-expandable fine particle-containing pressure-sensitive adhesive layer sheet S) was prepared in the same manner as in Example 1, except that the thermal-expandable fine particle-containing pressure-sensitive adhesive composition G was used in place of the thermal-expandable fine particle-containing pressure-sensitive adhesive composition A. Solvent-insoluble content in the thermal-expandable fine particle-containing pressure-sensitive adhesive layer was 80% by weight.
The thermal-expandable fine particle-containing pressure-sensitive adhesive layer sheet S was attached to the viscoelastic layer sheet A in the same manner as in Example 1, thereby obtain a pressure-sensitive adhesive sheet having the thermal-expandable fine particle-containing pressure-sensitive adhesive layer on one side of the bubble-mixed, fine particle-containing viscoelastic layer (a sheet having a laminate constitution of release film A/bubble-mixed, fine particle-containing viscoelastic layer/thermal-expandable fine particle-containing pressure-sensitive adhesive layer/release film B).

(Comparative Example 4)

A sheet having the bubble-mixed, fine particle-containing viscoelastic layer between two release films (the viscoelastic layer sheet A, a sheet having a laminate constitution of release film A/bubble-mixed, fine particle-containing viscoelastic layer/release film B) obtained in Preparation Example 1 was used.

(Comparative Example 5)

A sheet having the thermal-expandable fine particle-containing pressure-sensitive adhesive layer between two release films (the thermal-expandable fine particle-containing pressure-sensitive adhesive layer sheet D, a sheet having a laminate constitution of release film A/thermal-expandable fine particle-containing pressure-sensitive adhesive layer/release film B) obtained in the Example 4 was used.

(Comparative Example 6)

A sheet having the thermal-expandable fine particle-containing pressure-sensitive adhesive layer between two release films (a thermal-expandable fine particle-containing pressure-sensitive adhesive layer sheet T) was prepared in the same manner as in Example 1, except that the thermal-expandable fine particle-containing pressure-sensitive adhesive composition S was used in place of the thermal-expandable fine particle-containing pressure-sensitive adhesive composition A. Solvent-insoluble content in the thermal-expandable fine particle-containing pressure-sensitive adhesive layer was 75.6% by weight.
The thermal-expandable fine particle-containing pressure-sensitive adhesive layer sheet T was adhered to the viscoelastic layer sheet B in the same manner as in Example 1, thereby obtain a pressure-sensitive adhesive sheet having the thermal-expandable fine particle-containing pressure-sensitive adhesive layer on one side of the bubble-mixed, fine

particle-containing viscoelastic layer (a sheet having a laminate constitution of release film A/viscoelastic layer/thermal-expandable fine particle-containing pressure-sensitive adhesive layer/release film B).

(Evaluation)

The sheets prepared in Examples and Comparative Examples were evaluated as follows. The results obtained are shown in Table 6.

(Preparation of Sample for Measurement)

A polyethylene terephthalate film (PET film, thickness: 50 μm, the surface is not release-treated, trade name: LUMIRROR S-10 #50, manufactured by Toray Industries, Inc.) was attached to an exposed surface obtained by peeling the release film A from each pressure-sensitive adhesive sheet prepared in Examples and Comparative Examples. The resulting laminate was cut into a width of 25 mm. Thus, a pressure-sensitive adhesive sheet having PET film as a support was obtained as a sample for measurement. The sample for measurement has a strip shape having a width of 25 mm and a length of 70 mm.
Samples for measurement of Examples and Comparative Examples 1 to 3 and 6 have a layer constitution of release film B/thermal-expandable fine particle-containing pressure-sensitive adhesive layer/bubble-mixed, fine particle-containing viscoelastic layer/PET film. Sample for measurement of Comparative Example 4 has a layer constitution of release film B/bubble-mixed, fine particle-containing viscoelastic layer/PET film. Sample for measurement of Comparative Example 5 has a layer constitution of release film B/thermal-expandable fine particle-containing pressure-sensitive adhesive layer/PET film.

(Evaluation of Initial Adhesive Force)

A 304 BA stainless steel plate (SUS304BA plate) was cleaned by rubbing 10 times reciprocating with a clean waste impregnated with isopropyl alcohol to obtain a clean 304 BA stainless steel plate.
The sample for measurement in which the release film B had been peeled off to expose the pressure-sensitive adhesive surface was pressure bonded to the clean 304 BA stainless steel plate in an atmosphere of 23°C by reciprocating one time with a 2 kg roller, to thereby adhere the sample for measurement to the 304 BA stainless steel plate. The resulting assembly was aged at 23°C for 30 minutes.
After aging, the sample for measurement was peeled off from the 304 BA stainless steel plate at a tension rate of 50 mm/min in 90° peeling direction using a tensile tester (model name: Tensile and Compression Testing Machine TG-1kN manufactured by Minebeya Co., Ltd.) in an atmosphere of 23°C, to thereby measure 90° peeling adhesive strength. The 90° peeling adhesive strength was taken as "initial adhesive force".
The case that the initial adhesive force is 20 N/25 mm or more was evaluated as "Good", and the case that the initial adhesive strength is less than 20 N/25 mm was evaluated as "Poor".

(Evaluation 1 of Heat Dismantlability)

A 304 BA stainless steel plate (SUS304BA plate) was cleaned by rubbing 10 times reciprocating with a clean waste impregnated with isopropyl alcohol to obtain a clean 304 BA stainless steel plate.
The sample for measurement in which the release film B had been peeled off to expose the pressure-sensitive adhesive surface was pressure bonded to the clean 304 BA stainless steel plate in an atmosphere of 23°C by reciprocating one time with a 2 kg roller, to thereby adhere the sample for measurement to the 304 BA stainless steel plate. The resulting assembly was aged at 23°C for 30 minutes to obtain a sample for evaluation of heat dismantlability.
The sample for evaluation of heat dismantlability was placed in a hot air dryer while maintaining the state that the sample for measurement was adhered to the 304BA stainless steel plate, and then heat-treated at 130°C for 10 minutes.
The condition of the sample for evaluation of heat dismantlability after heat treatment was confirmed, and heat dismantlability was evaluated by the following standards.
Good: Case that a sample for measurement has been peeled off from a 304BA stainless steel plate, or case that a sample for measurement can easily be peeled off from a 304BA stainless steel plate
Failure: Case that a sample for measurement cannot easily be peeled off from a 304BA stainless steel plate
The results of evaluation 1 of heat dismantlability are shown in column of "23°C × 30 min" in Heat Dismantlability in Table 6.

(Evaluation 2 of Heat Dismantlability)

A 304 BA stainless steel plate (SUS304BA plate) was cleaned by rubbing 10 times reciprocating with a clean

waste impregnated with isopropyl alcohol to obtain a clean 304 BA stainless steel plate.
The sample for measurement in which the release film B had been peeled off to expose the pressure-sensitive adhesive surface was pressure bonded to the clean 304 BA stainless steel plate in an atmosphere of 23°C by reciprocating one time with a 2 kg roller, to thereby adhere the sample for measurement to the 304 BA stainless steel plate. The resulting assembly was aged at 85°C for one week, followed by allowed to stand at 23°C for 24 hours, to obtain a sample for evaluation of heat dismantlability.
The sample for evaluation of heat dismantlability was placed in a hot air dryer while maintaining the state that the sample for measurement was adhered to the 304BA stainless steel plate, and then heat-treated at 130°C for 10 minutes.
The condition of the sample for evaluation of heat dismantlability after heat treatment was confirmed, and heat dismantlability was evaluated by the following standards.
Good: Case that a sample for measurement has been peeled off from a 304BA stainless steel plate, or case that a sample for measurement can easily be peeled off from a 304BA stainless steel plate
Failure: Case that a sample for measurement cannot easily be peeled off from a 304BA stainless steel plate
The results of evaluation 2 of heat dismantlability are shown in column of "85°C × one week" in Heat Dismantlability in Table 6.

(Evaluation of Repelling Resistance)

Each of the pressure-sensitive adhesive sheets prepared in Examples and Comparative Examples was cut into a size having a width of 10 mm and a length of 90 mm. The pressure-sensitive adhesive sheet after cutting in which the release film A had been peeled off to expose one side of the pressure-sensitive adhesive sheet was adhered to an aluminum plate having the same size (aluminum plate having a size of width: 10 mm and length: 90 mm, and a thickness of 0.4 mm) to obtain a sample for repelling resistance test.
Samples for repelling resistance test of Examples and Comparative Examples 1 to 3 and 6 have a layer constitution of release film B/thermal-expandable fine particle-containing adhesive pressure-sensitive layer/bubble-mixed, fine particle-containing viscoelastic layer/aluminum plate. Sample for repelling resistance test of Comparative Example 4 has a layer constitution of release film B/bubble-mixed, fine particle-containing viscoelastic layer/aluminum plate. Sample for repelling resistance test of Comparative Example 5 has a layer constitution of release film B/thermal-expandable fine particle-containing pressure-sensitive adhesive layer/aluminum plate.
Each of the samples for repelling resistance test was bent at the curvature of R50, that is, bent along the circumference of a circle having a radius of 20 mm in such a manner that the surface side provided by the release film B (in Examples and Comparative Examples 1 and 3 and 6, thermal-expandable fine particle-containing pressure-sensitive adhesive layer side) faces outward.
After bending, the release film B was peeled off from the sample for repelling resistance test to expose the pressure-sensitive adhesive surface. The sample for repelling resistance test having the exposed pressure-sensitive adhesive surface was adhered by pressure-bonding to an acrylic plate (transparent, trade name: ACRYLITE, manufactured by Mitsubishi Rayon Co., Ltd.) using a laminator so as not to form floating.
The sample for repelling resistance test, adhered to the acrylic plate was allowed to stand at room temperature (23°C) for 7 hours. Floating distance (distance floated) from the acrylic plate at both ends (both ends in a length direction) of the sample for repelling resistance test was measured, and its average value was obtained. The average value was taken as "floating distance".
The case that the floating distance was less than 1 mm was evaluated as "Very good", the case that the floating distance was 1 mm or more to less than 3 mm was evaluated as "Good", and the case that the floating distance was more than 3 mm was evaluated as "Poor".

In Comparative Example 3, "interlaminar fracture" (peeling between the thermal-expandable fine particle-containing pressure-sensitive adhesive layer and the bubble-mixed, fine particle-containing viscoelastic layer) occurred at evaluating the repelling resistance, and evaluation could not be made.

TABLE 6

| | Initial adhesive force | | Heat Dismantlability | | Repelling resistance | |
|---|---|---|---|---|---|---|
| | 90° Peeling adhesive strength (N/25 mm) | Evaluation | 23°C × 30 min | 85°C × one week | Floating distance (mm) | Evaluation |
| Example 1 | 46 | Good | Good | Poor | 0 | Very good |
| Example 2 | 28 | Good | Good | Poor | 0 | Very good |

(continued)

| | Initial adhesive force | | Heat Dismantlability | | Repelling resistance | |
|---|---|---|---|---|---|---|
| | 90° Peeling adhesive strength (N/25 mm) | Evaluation | 23°C × 30 min | 85°C × one week | Floating distance (mm) | Evaluation |
| Example 3 | 39 | Good | Good | Poor | 0 | Very good |
| Example 4 | 29 | Good | Good | Good | 0 | Very good |
| Example 5 | 36 | Good | Good | Good | 0 | Very good |
| Example 6 | 33 | Good | Good | Poor | 0 | Very good |
| Example 7 | 32 | Good | Good | Poor | 0.5 | Very good |
| Example 8 | 36 | Good | Good | Good | 0 | Very good |
| Example 9 | 27 | Good | Good | Good | 0 | Very good |
| Example 10 | 23 | Good | Good | Good | 0 | Very good |
| Example 11 | 30.5 | Good | Good | Good | 0 | Very good |
| Example 12 | 25.7 | Good | Good | Good | 0 | Very good |
| Example 13 | 21.9 | Good | Good | Poor | 0 | Very good |
| Example 14 | 21 | Good | Good | Good | 0 | Very good |
| Example 15 | 20 | Good | Good | Poor | 0 | Very good |
| Comparative Example 1 | 25 | Good | Poor | Poor | 0 | Very good |
| Comparative Example 2 | 22 | Good | Good | Poor | 4 | Poor |
| Comparative Example 3 | 9 | Poor | Good | Good | Interlaminar fracture | Poor |
| Comparative Example 4 | 43.5 | Good | Poor | Poor | - | - |
| Comparative Example 5 | 7.4 | Poor | Good | Good | - | - |
| Comparative Example 6 | 11.1 | Poor | Poor | Poor | - | - |
| In Table 6, "-" means that measurement was not conducted. | | | | | | |

The pressure-sensitive adhesive sheets prepared in Examples showed good initial adhesive force and adhesion reliability (particularly, repelling resistance) to adherends, and could easily be peeled off (dismantled) by heating. Therefore, these sheets can be used in rework and recycle uses.

The pressure-sensitive adhesive sheet prepared in Comparative Example 1 showed good initial adhesive force, but could not be peeled off by heating. The pressure-sensitive adhesive sheet prepared in Comparative Example 2 had poor adhesion reliability, and could easily be peeled off. However, the sheet was poor in initial adhesive force. The pressure-sensitive adhesive sheet prepared in Comparative Example 3 had poor initial adhesive force, and has also poor repelling resistance. Form those facts, adhesion reliability as a whole was poor. The pressure-sensitive adhesive sheet prepared in Comparative Example 4 had poor heat dismantlability. The pressure-sensitive adhesive sheet prepared in Comparative Example 5 had poor initial adhesive force. The pressure-sensitive adhesive sheet prepared in Comparative Example 6 had poor initial adhesive force and heat dismantlability.

## Claims

1. A pressure-sensitive adhesive tape or sheet comprising: a viscoelastic layer containing bubbles and/or fine particles; and a pressure-sensitive adhesive layer formed on at least one side of the viscoelastic layer and formed from a pressure-sensitive adhesive composition comprising a monomer mixture comprising the following (a1), (a2) and (a3) or partially polymerized product thereof, and thermal-expandable fine particles:

   (a1) alkyl (meth)acrylate monomer having 4 to 12 carbon atoms in its alkyl moiety and having a glass transition temperature when formed into a homopolymer of lower than 0°C;
   (a2) monomer having at least one nitrogen atom and one ethylenically unsaturated bond in its molecule; and
   (a3) monomer having one ethylenically unsaturated bond in its molecule and having a glass transition temperature when formed into a homopolymer of *0°C or higher (excluding (a2) above);

   wherein the glass transition temperature is determined as described herein.

2. The pressure-sensitive adhesive tape or sheet according to claim 1, wherein in the monomer mixture, the content of the (a1) is 50 to 80% by weight, the content of the (a2) is 5 to 40% by weight, and the content of the (a3) is 5 to 40% by weight, based on the total weight (100% by weight) of (a1), (a2) and (a3).

3. The pressure-sensitive adhesive tape or sheet according to claim 1 or 2, wherein the (a2) is at least one monomer selected from the group consisting of dimethyl acrylamide, N-vinyl pyrrolidone and N-vinyl caprolactam.

4. The pressure-sensitive adhesive tape or sheet according to any one of claims 1 to 3, wherein the (a3) is a (meth) acrylate monomer having a glass transition temperature when formed into a homopolymer of 0°C or higher and having a structure that a (meth)acryloyloxy group is bonded with a tertiary carbon atom; or a (meth)acrylate monomer having a glass transition temperature when formed into a homopolymer of 0°C or higher and having a structure that a (meth)acryloyloxy group is bonded with a carbon atom constituting a ring of a monocyclic or polycyclic alicyclic hydrocarbon.

5. The pressure-sensitive adhesive tape or sheet according to any one of claims 1 to 4, wherein the (a3) is at least one monomer selected from the group consisting of tert-butyl (meth)acrylate, cyclohexyl (meth)acrylate, isobornyl (meth)acrylate, 1,4-cyclohexanedimethanol mono(meth)acrylate, dicyclopentenyloxyethyl (meth)acrylate and dicyclopentanyl (meth)acrylate.

6. The pressure-sensitive adhesive tape or sheet according to any one of claims 1 to 5, wherein the monomer mixture contains a carboxyl group-containing monomer in 0.1 part by weight or less per 100 parts by weight of the total amount of the monomer components".

7. The pressure-sensitive adhesive tape or sheet according to any one of claims 1 to 6, wherein the pressure-sensitive adhesive composition further comprises a photopolymerization initiator.

8. The pressure-sensitive adhesive tape or sheet according to any one of claims 1 to 7, wherein the pressure-sensitive adhesive composition further comprises a monomer having two or more ethylenically unsaturated bonds in its molecule.

## Patentansprüche

1. Haftklebeband oder -Folie, umfassend: eine viskoelastische Schicht, die Blasen und/oder Feinpartikel enthält; und eine Haftklebeschicht, die auf mindestens einer Seite der viskoelastischen Schicht gebildet ist und die aus einer Haftklebezusammensetzung gebildet ist, umfassend ein Monomergemisch, umfassend die folgenden (a1), (a2) und (a3) oder ein teilweise polymerisiertes Produkt derselben, und thermisch expandierbare Feinpartikel:

   (a1) ein Alkyl(meth)acrylat-Monomer mit 4 bis 12 Kohlenstoffatomen in seinem Alkylteil und mit einer Glasübergangstemperatur von weniger als 0°C, wenn daraus ein Homopolymer gebildet wird;
   (a2) ein Monomer mit mindestens einem Stickstoffatom und einer ethylenisch ungesättigten Bindung in seinem Molekül; und
   (a3) ein Monomer mit einer ethylenisch ungesättigten Bindung in seinem Molekül und mit einer Glasübergangstemperatur von 0°C oder höher, wenn daraus ein Homopolymer gebildet wird (ohne (a2) oben);

wobei die Glasübergangstemperatur wie hierin beschrieben bestimmt wird.

2. Haftklebeband oder -Folie gemäß Anspruch 1, wobei in dem Monomergemisch der Gehalt an (a1) 50 bis 80 Gew.%, der Gehalt an (a2) 5 bis 40 Gew.%, und der Gehalt an (a3) 5 bis 40 Gew.% beträgt, bezogen auf das Gesamtgewicht (100 Gew.%) von (a1), (a2) und (a3).

3. Haftklebeband oder -Folie gemäß Anspruch 1 oder 2, wobei (a2) mindestens ein Monomer ist, ausgewählt aus der Gruppe, bestehend aus Dimethylacrylamid, N-Vinylpyrrolidon und N-Vinylcaprolactam.

4. Haftklebeband oder -Folie gemäß einem der Ansprüche 1 bis 3, wobei (a3) ein (Meth)acrylat-Monomer ist, das eine Glasübergangstemperatur von 0°C oder höher aufweist, wenn daraus ein Homopolymer gebildet wird, und eine Struktur hat, bei der eine (Meth)acryloyloxygruppe an ein tertiäres Kohlenstoffatom gebunden ist; oder ein (Meth)acrylat-Monomer, das eine Glasübergangstemperatur von 0°C oder höher aufweist, wenn daraus ein Homopolymer gebildet wird, und eine Struktur hat, bei der eine (Meth)acryloyloxygruppe an ein Kohlenstoffatom gebunden ist, das einen Ring eines mono- oder polycyclischen alicyclischen Kohlenwasserstoffs konstituiert.

5. Haftklebeband oder -Folie gemäß einem der Ansprüche 1 bis 4, wobei (a3) mindestens ein Monomer ist, ausgewählt aus der Gruppe, bestehend aus tert-Butyl(meth)acrylat, Cyclohexyl(meth)acrylat, Isobornyl(meth)acrylat, 1,4-Cyclohexandimethanol-Mono(meth)acrylat, Dicyclopentenyloxyethyl(meth)acrylat und Dicyclopentanyl(meth)acrylat.

6. Haftklebeband oder -Folie gemäß einem der Ansprüche 1 bis 5, wobei die Monomermischung ein eine Carboxylgruppe enthaltendes Monomer in 0,1 Gewichtsteilen oder weniger pro 100 Gewichtsteilen der Gesamtmenge der Monomerkomponenten enthält.

7. Haftklebeband oder -Folie gemäß einem der Ansprüche 1 bis 6, wobei die Haftklebezusammensetzung ferner einen Photopolymerisationsinitiator umfasst.

8. Haftklebeband oder -Folie gemäß einem der Ansprüche 1 bis 7, wobei die Haftklebezusammensetzung ferner ein Monomer mit zwei oder mehr ethylenisch ungesättigten Bindungen in seinem Molekül umfasst.

## Revendications

1. Ruban ou feuille adhésive autocollante, comprenant : une couche viscoélastique contenant des bulles et/ou de fines particules, et une couche adhésive autocollante formée sur au moins une face de la couche viscoélastique et formée à partir d'une composition adhésive autocollante comprenant un mélange de monomères comprenant les (a1), (a2) et (a3) suivants ou un produit partiellement polymérisé de ceux-ci, et de fines particules thermo-expansibles :

(a1) monomère (méth)acrylate d'alkyle ayant 4 à 12 atomes de carbone dans sa partie alkyle et ayant une température de transition vitreuse, sous forme d'homopolymère, inférieure à 0°C ;
(a2) monomère ayant au moins un atome d'azote et une liaison éthyléniquement insaturée dans sa molécule, et
(a3) monomère ayant une liaison éthyléniquement insaturée dans sa molécule et ayant une température de transition vitreuse, sous forme d'homopolymère, de 0°C ou plus (à l'exclusion de (a2) ci-dessus) où la température de transition vitreuse est déterminée comme décrit ici.

2. Ruban ou feuille adhésive autocollante selon la revendication 1, où dans le mélange de monomères, la teneur en (a1) est de 50 à 80% en poids, la teneur en (a2) est de 5 à 40% en poids, et la teneur en (a3) est de 5 à 40% en poids, sur base du poids total (100% en poids) de (a1), (a2) et (a3).

3. Ruban ou feuille adhésive autocollante selon la revendication 1 ou 2, où (a2) est au moins un monomère choisi parmi le groupe consistant en le diméthylacrylamide, la N-vinylpyrrolidone et le N-vinyl-caprolactame.

4. Ruban ou feuille adhésive autocollante selon l'une quelconque des revendications 1 à 3, où (a3) est un monomère (méth)acrylate ayant une température de transition vitreuse en tant qu'homopolymère de 0°C ou plus et ayant une structure telle qu'un radical (méth)acryloyloxy est lié à un atome de carbone tertiaire; ou un monomère (méth) acrylate ayant une température de transition vitreuse en tant qu'homopolymère de 0°C ou plus et ayant une structure

telle qu'un radical (méth)acryloyloxy est lié à un atome de carbone composant un cycle d'un hydrocarbure alicyclique, monocyclique ou polycyclique.

**5.** Ruban ou feuille adhésive autocollante selon l'une quelconque des revendications 1 à 4, où (a3) est au moins un monomère choisi parmi le groupe consistant en le (méth)acrylate de t-butyle, le (méth)acrylate de cyclohexyle, le (méth)acrylate d'isobornyle, le mono(méth)acrylate de 1,4-cyclohexanediméthanol, le (méth)acrylate de dicyclopenténylоxyéthyle et le (méth)acrylate de dicyclopentanyle.

**6.** Ruban ou feuille adhésive autocollante selon l'une quelconque des revendications 1 à 5, où le mélange de monomères contient un monomère contenant un radical carboxyle en la quantité de 0,1 partie en poids ou moins par 100 parties en poids de la quantité totale des composants monomères.

**7.** Ruban ou feuille adhésive autocollante selon l'une quelconque des revendications 1 à 6, où la composition adhésive autocollante comprend en outre, un initiateur de photopolymérisation.

**8.** Ruban ou feuille adhésive autocollante selon l'une quelconque des revendications 1 à 7, où la composition adhésive autocollante comprend en outre, un monomère ayant deux liaisons éthyléniquement insaturées ou plus dans sa molécule.

Fig. 1

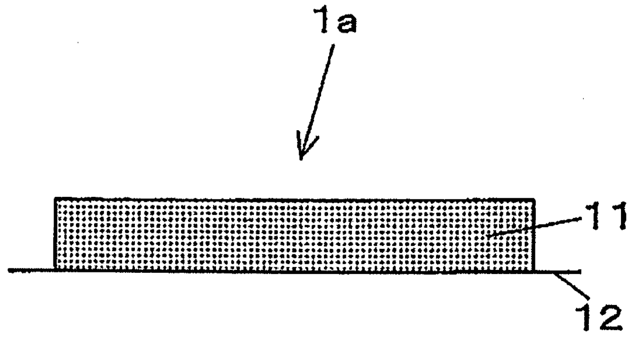


Fig. 2

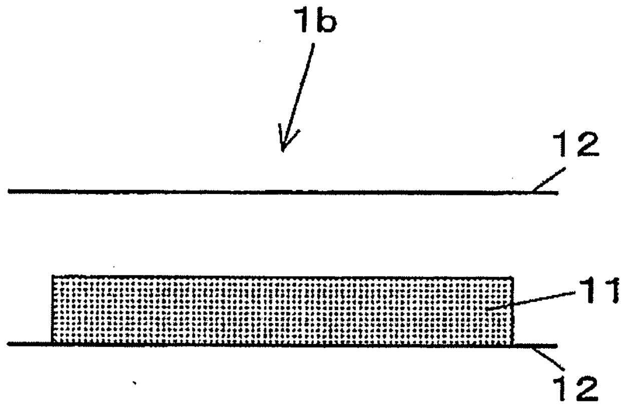


Fig. 3

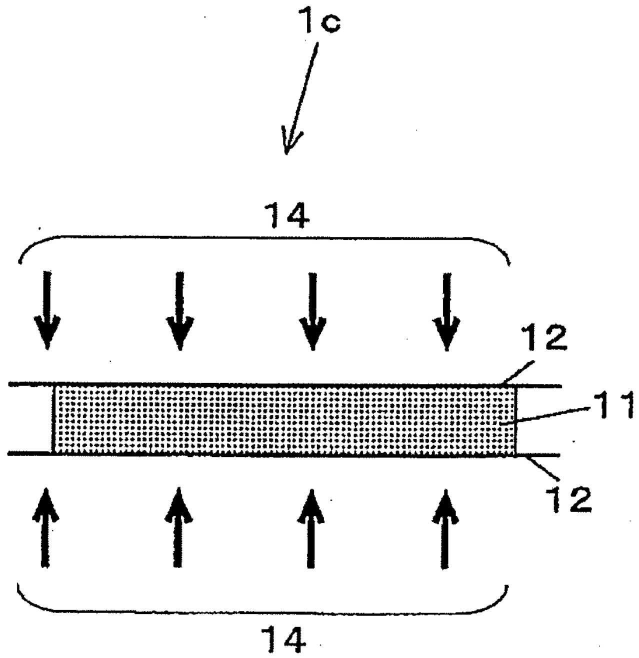

Fig. 4

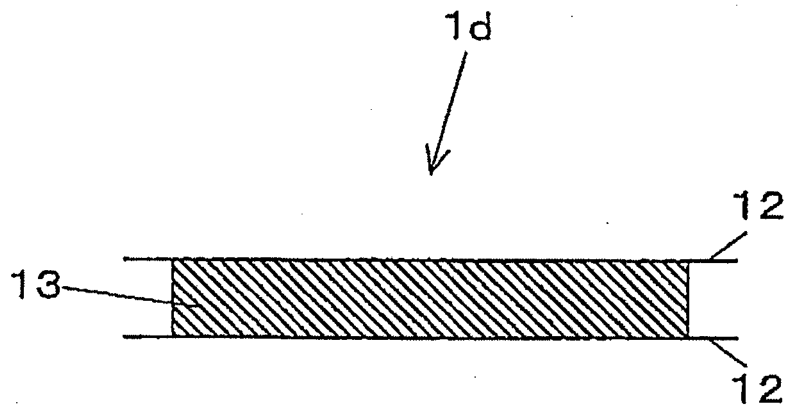


Fig. 5

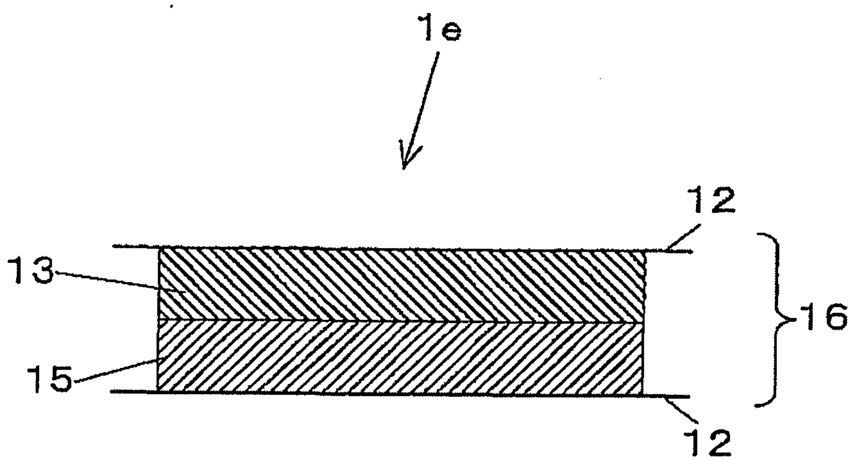

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006022189 A
- JP 2001247832 A
- EP 2204426 A1
- JP 2009120807 A
- JP 2008012798 A
- JP 2003013015 A


### Non-patent literature cited in the description


- Polymer Handbook. John Wiley & Sons, Inc, 1989